# EUROPEAN PATENT APPLICATION

(11) **EP 4 321 822 A1**
(43) Date of publication of application: **14.02.2024**
(21) Application number: 21936022.9
(22) Date of filing: 08.04.2021
(51) Int. Cl.: F25B 49/02, F25B 41/20, F25B 41/24

(54) **OPEN/CLOSE VALVE UNIT AND REFRIGERATION DEVICE USING SAME**

(71) Applicant: MITSUBISHI ELECTRIC CORPORATION, Chiyoda-ku Tokyo 100-8310 (JP)
(72) Inventor: KUMOKAWA, Shota, Tokyo 100-8310 (JP); ISHIMURA, Katsuhiro, Tokyo 100-8310 (JP); OKANO, Hiroyuki, Tokyo 100-8310 (JP)
(74) Representative: Witte, Weller & Partner Patentanwälte mbB
(86) International application number: PCT/JP2021/014855
(87) International publication number: WO 2022/215218

(57) **Abstract**

An open-close valve unit includes a block body, a first open-close valve, and a second open-close valve. The block body includes a first main flow path and a second main flow path that are defined within the block body. The first main flow path has a first opening and a second opening each serving as an inlet or an outlet for a fluid. The second main flow path has a third opening and a fourth opening each serving as an inlet or an outlet for the fluid. The second main flow path is arranged side by side with the first main flow path. The first open-close valve includes a first valve body disposed in the first main flow path. The first valve body is movable in the first main flow path to open and close the first main flow path. The second open-close valve includes a second valve body disposed in the second main flow path. The second valve body is movable in the second main flow path to open and close the second main flow path. The first open-close valve is in an open state when in an energized state. When the first open-close valve is in the energized state, the second open-close valve is in a de-energized state, and placed in an open state by a dynamic pressure of the fluid flowing in the second main flow path.

## Description

### Technical Field

The present disclosure relates to an open-close valve unit for use in a refrigeration apparatus, and a refrigeration apparatus employing the open-close valve unit.

### Background Art

Patent Literature 1 proposes a technique aimed to, if refrigerant leakage occurs in a refrigeration apparatus, minimize the amount of refrigerant that is released to an indoor space or into the atmosphere. Specifically, the refrigeration apparatus is provided with a leakage detection device that detects leakage of refrigerant from the refrigeration apparatus, and open-close valves disposed at a location along a pipe that connects an indoor unit and an outdoor unit. Patent Literature 1 proposes a control method that involves, in response to the leakage detection device detecting leakage of refrigerant, performing one of the following operations: closing the open-close valves; and first closing one open-close valve disposed at a location along the pipe, and after executing an operation for recovering refrigerant, closing the other open-close valve.

### Citation List

### Patent Literature

Patent Literature 1: Japanese Unexamined Patent Application Publication No. 5-118720

### Summary of Invention

### Technical Problem

The refrigeration apparatus disclosed in Patent Literature 1 includes two open-close valves connected to a single indoor unit. This increases the complexity of pipe installation and electrical wiring for the open-close valves during installation work of the refrigeration apparatus, which leads to decreased working efficiency. In particular, if multiple indoor units are connected to a single outdoor unit, an open-close valve needs to be mounted individually to each of the inlet-side refrigerant pipe and the outlet-side refrigerant pipe that are connected to each indoor unit. This markedly decreases the ease of installation, and increases the complexity of wiring.

In view of the above issue, the present disclosure is directed to providing an open-close valve unit that makes it possible to simplify pipe installation and electrical wiring during installation work for improved working efficiency, and a refrigeration apparatus employing the open-close valve unit.

### Solution to Problem

An open-close valve unit according to an embodiment of the present disclosure includes a block body, a first open-close valve, and a second open-close valve. The block body includes a first main flow path and a second main flow path that are defined within the block body. The first main flow path has a first opening and a second opening each serving as an inlet or an outlet for a fluid. The second main flow path has a third opening and a fourth opening each serving as an inlet or an outlet for the fluid. The second main flow path is arranged side by side with the first main flow path. The first open-close valve includes a first valve body disposed in the first main flow path. The first valve body is movable in the first main flow path to open and close the first main flow path. The second open-close valve includes a second valve body disposed in the second main flow path. The second valve body is movable in the second main flow path to open and close the second main flow path. The first open-close valve is in an open state when in an energized state. When the first open-close valve is in the energized state, the second open-close valve is in a de-energized state, and placed in an open state by a dynamic pressure of the fluid flowing in the second main flow path.

### Advantageous Effects of Invention

The open-close valve unit according to an embodiment of the present disclosure includes two open-close valves provided as a single unit. This makes it possible to mount two open-close valves simply through execution of pipe installation and electrical wiring on a single open-close valve unit, which leads to improved working efficiency. Brief Description of Drawings

[Fig. 1] Fig. 1 schematically illustrates an example of the circuit configuration of a refrigeration apparatus according to Embodiment 1.
[Fig. 2] Fig. 2 illustrates, in perspective view, an example of the exterior structure of an open-close valve unit according to Embodiment 1.
[Fig. 3] Fig. 3 is a sectional diagram of a part A of Fig. 2.
[Fig. 4] Fig. 4 is a sectional diagram of the part A of Fig. 2, illustrating an example of how fluid flows when an open-close valve of the open-close valve unit according to Embodiment 1 is in an energized state.
[Fig. 5] Fig. 5 is a sectional diagram of a part B of Fig. 2, illustrating an example of how fluid flows when an open-close valve of the open-close valve unit according to Embodiment 1 is in a de-energized state.
[Fig. 6] Fig. 6 is a flowchart illustrating an example of a refrigerant leakage detection process to be executed by the refrigeration apparatus according to Embodiment 1.
[Fig. 7] Fig. 7 schematically illustrates an example of the circuit configuration of a refrigeration apparatus according to Embodiment 2.
[Fig. 8] Fig. 8 schematically illustrates an example of the circuit configuration of a refrigeration apparatus according to Embodiment 3.
[Fig. 9] Fig. 9 is a flowchart illustrating an example of a refrigerant leakage detection process to be executed by the refrigeration apparatus according to Embodiment 3.

### Description of Embodiments

An open-close valve unit, and a refrigeration apparatus employing the open-close valve unit are described below by way of embodiments with reference to the drawings. The present disclosure is not limited to the embodiments disclosed herein but allows various modifications to be made to the embodiments without departing from the scope and spirit of the present disclosure. The present disclosure may encompass all possible combinations of configurations as described with reference to the embodiments below. The drawings illustrate one example of possible configurations of the open-close valve unit and the refrigeration apparatus, and are not intended to limit the open-close valve unit and the refrigeration apparatus according to the present disclosure to the configurations illustrated in the drawings. Although directional terms (e.g., "upper", "lower", and so on) are used herein as appropriate to facilitate understanding, such directional terms are to be considered illustrative only, rather than restrictive of the present disclosure. Features designated by the same reference signs in the drawings represent the same or corresponding features throughout the specification. In the drawings, relative dimensions, shapes, or other features of individual components may differ from the actuality.

### Embodiment 1.

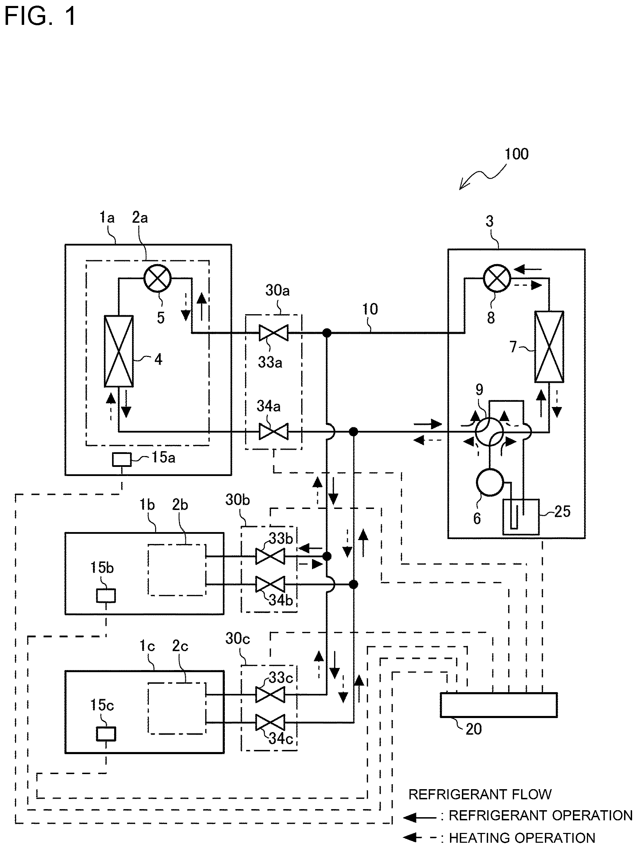

Fig. 1 schematically illustrates an example of the circuit configuration of a refrigeration apparatus 100 according to Embodiment 1. An open-close valve unit 30 according to Embodiment 1 can be used for refrigeration apparatuses that include a single indoor unit and a single outdoor unit, and that are capable of executing only a cooling operation, only a heating operation, or switching between cooling and heating operations. Fig. 1, however, depicts the refrigeration apparatus 100 that includes multiple open-close valve units 30 corresponding to multiple indoor units 2, and that is capable of switching between cooling and heating operations.

### [Configuration of Refrigeration Apparatus]

As illustrated in Fig. 1, the refrigeration apparatus 100 according to Embodiment 1 includes the following components: an outdoor unit 3 serving as a heat source unit; multiple indoor units 2a, 2b, and 2c; and open-close valve units 30a, 30b, and 30c, which are disposed between the outdoor unit 3 and the indoor units 2a, 2b, and 2c. The open-close valve unit 30a corresponds to the indoor unit 2a. The open-close valve unit 30b corresponds to the indoor unit 2b. The open-close valve unit 30c corresponds to the indoor unit 2c. The outdoor unit 3, each of the open-close valve units 30a, 30b, and 30c, and each of the indoor units 2a, 2b, and 2c are connected by a refrigerant pipe 10. A refrigerant circuit is thus formed in which refrigerant circulates through the refrigerant pipe 10.

In Fig. 1, solid arrows represent the flow of refrigerant during cooling operation, and dashed lines represent the flow of refrigerant during heating operation. One possible but non-limiting example of the refrigerant to be used may be an R32 refrigerant. The flow of refrigerant during cooling operation and the flow of refrigerant during heating operation will be described later.

### (Outdoor Unit)

As illustrated in Fig. 1, the outdoor unit 3 includes a compressor 6, an outdoor heat exchanger 7, an expansion valve 8, a refrigerant flow switching device 9, and an accumulator 25. The compressor 6 compresses refrigerant into a high-temperature, high-pressure state, and discharges the resulting refrigerant.

The outdoor heat exchanger 7 allows heat exchange between air supplied by an air-sending device such as a fan (not illustrated) (to be hereinafter referred to as "outdoor air" as appropriate), and refrigerant. Specifically, during cooling operation, the outdoor heat exchanger 7 functions as a condenser that rejects the heat of refrigerant to outdoor air to condense the refrigerant. During heating operation, the outdoor heat exchanger 7 functions as an evaporator that evaporates refrigerant to cool outdoor air with the resulting heat of vaporization.

The refrigerant flow switching device 9 is, for example, a four-way valve. The refrigerant flow switching device 9 is capable of switching the flows of refrigerant to allow switching between cooling and heating operations of the refrigeration apparatus 100. The refrigerant flow switching device 9 is not limited to a four-way valve but may be a combination of two-way valves, three-way valves, or other valves.

The accumulator 25 is connected to the suction side of the compressor 6. Due to the switching action of the refrigerant flow switching device 9, the accumulator 25 is connected downstream of the outdoor heat exchanger 7 during heating operation. The accumulator 25 is connected downstream of an indoor heat exchanger 4 during cooling operation. The accumulator 25 is a vessel for storing excess refrigerant, and serves to absorb the difference in refrigerant flow rate between the cooling operation and the heating operation. The outdoor unit 3 may include no accumulator 25.

The expansion valve 8 reduces the pressure of refrigerant flowing in from the indoor units 2a, 2b, and 2c during heating operation. If the refrigeration apparatus 100 is of a cooling-only type, the outdoor unit 3 may include no expansion valve 8. If the indoor units 2a, 2b, and 2c each include an expansion valve 5, the function of the expansion valve 8 may be implemented by the expansion valve 5 so that no expansion valve 8 is provided.

### (Indoor Unit)

The indoor units 2a, 2b, and 2c are respectively disposed in spaces 1a, 1b, and 1c, which are air-conditioned spaces. The indoor units 2a, 2b, and 2c supply air used for cooling or air used for heating respectively to the spaces 1a, 1b, and 1c by utilizing the cooling energy or heating energy of refrigerant circulating in the refrigerant pipe 10. The indoor units 2a, 2b, and 2c each include the indoor heat exchanger 4, and the expansion valve 5. Although Fig. 1 does not illustrate the respective circuit configurations of the indoor units 2b and 2c in detail, these circuit configurations are the same as the circuit configuration of the indoor unit 2a. In the following description, the indoor units 2a, 2b, and 2c will be simply referred to as "indoor unit 2" as appropriate when no particular distinction is needed therebetween. The term "indoor unit 2" as referred to herein is meant to include both the singular and plural forms of the term.

The indoor heat exchanger 4 in each of the indoor units 2a, 2b, and 2c allows heat exchange between air supplied by an air-sending device such as a fan (not illustrated), and refrigerant. As a result, air used for cooling or air used for heating, which is to be supplied to the spaces 1a, 1b, and 1c, is produced. Specifically, when refrigerant is carrying cooling energy during cooling operation, each indoor heat exchanger 4 functions as an evaporator to provide cooling by cooling the air in the corresponding one of the spaces 1a, 1b, and 1c, which are air-conditioned spaces. When refrigerant is carrying heating energy during heating operation, each indoor heat exchanger 4 functions as a condenser to provide heating by heating the air in the corresponding one of the spaces 1a, 1b, and 1c, which are air-conditioned spaces.

The respective expansion valves 5 of the indoor units 2a, 2b, and 2c reduce the pressure of refrigerant flowing in from the open-close valve units 30a, 30b, and 30c during cooling operation. If the refrigeration apparatus 100 is of a heating-only type, the indoor unit 2 may include no expansion valve 5. If the outdoor unit 3 includes the expansion valve 8, each of the indoor units 2a, 2b, and 2c preferably includes the expansion valve 5 for adjustment of capacity in each indoor unit 2. If, however, these indoor units are designed to include no expansion valve 5, the function of the expansion valve 5 may be implemented by the expansion valve 8.

### (Open-Close Valve Unit)

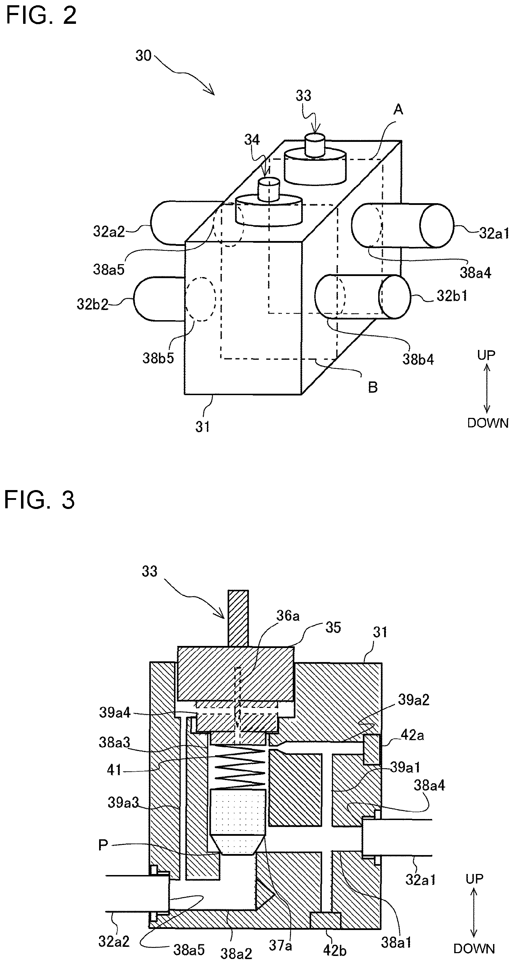

The open-close valve units 30a, 30b, and 30c respectively correspond to the indoor units 2a, 2b, and 2c. The open-close valve unit 30a includes a first open-close valve 33a, and a second open-close valve 34a. The open-close valve unit 30b includes a first open-close valve 33b, and a second open-close valve 34b. The open-close valve unit 30c includes a first open-close valve 33c, and a second open-close valve 34c. The open-close valve units 30a, 30b, and 30c will be described later with reference to Figs. 2 to 4, and thus are not described here in detail. In the following description, the open-close valve units 30a, 30b, and 30c will be simply referred to as "open-close valve unit 30" as appropriate when no particular distinction is needed therebetween. The term "open-close valve unit 30" as referred to herein is meant to include both the singular and plural forms of the term. Further, the first open-close valves 33a, 33b, and 33c will be simply referred to as "first open-close valve 33" as appropriate when no particular distinction is needed therebetween. The term "first open-close valve 33" as referred to herein is meant to include both the singular and plural forms of the term. The second open-close valves 34a, 34b, and 34c will be simply referred to as "second open-close valve 34" as appropriate when no particular distinction is needed therebetween. The term "second open-close valve 34" as referred to herein is meant to include both the singular and plural forms of the term.

### (Refrigerant Leakage Detection Device)

The refrigeration apparatus 100 includes refrigerant leakage detection devices 15a, 15b, and 15c to respectively detect leakage of refrigerant in the spaces 1a, 1b, and 1c where the indoor units 2a, 2b, and 2c are disposed. The refrigerant leakage detection devices 15a, 15b, and 15c each detect refrigerant leakage by detecting the concentration of refrigerant or the concentration of oxygen. In one example, refrigerant leakage is determined to have occurred when the concentration of refrigerant has become greater than or equal to a predetermined value. In another example, refrigerant leakage is determined to have occurred when the concentration of oxygen has become less than or equal to a predetermined value. In still another example, whether refrigerant leakage has occurred may be determined through detection of both the concentration of refrigerant and the concentration of oxygen. In the following description, the refrigerant leakage detection devices 15a, 15b, and 15c will be simply referred to as "refrigerant leakage detection device 15" as appropriate when no particular distinction is needed therebetween. The term "refrigerant leakage detection device 15" as referred to herein is meant to include both the singular and plural forms of the term. Further, the spaces 1a, 1b, and 1c will be simply referred to as "space 1" as appropriate when no particular distinction is needed therebetween. The term "indoor unit 1" as referred to herein is meant to include both the singular and plural forms of the term.

### (Controller)

The refrigeration apparatus 100 is provided with a controller 20. The controller 20 includes, for example, software to be executed on a computing unit such as a microcomputer or a central processing unit (CPU), and hardware such as a circuit device for implementing various functions. The controller 20 controls the overall operation of the refrigeration apparatus 100. For example, the signal line of the open-close valve unit 30 is connected to the controller 20. The controller 20 executes opening and closing control of the open-close valve unit 30 by switching the open-close valve unit 30 between energized and de-energized states. The signal line of the refrigerant leakage detection device 15 is connected to the controller 20. The controller 20 performs a control that is to be executed when the refrigerant leakage detection device 15 detects refrigerant leakage. Although not illustrated, the power line of each of the open-close valve unit 30 and the refrigerant leakage detection device 15 is connected to a power supply.

### [Configuration of Open-Close Valve Unit]

Reference is now made to Figs. 2 and 3 to describe the open-close valve unit 30 according to Embodiment 1. Fig. 2 illustrates, in perspective view, an example of the exterior structure of the open-close valve unit 30 according to Embodiment 1. As illustrated in Fig. 2, the open-close valve unit 30 includes a block body 31, the first open-close valve 33, and the second open-close valve 34. The block body 31 is provided with a first opening 38a4, a second opening 38a5, a third opening 38b4, and a fourth opening 38b5. The first opening 38a4 is connected with a first connection pipe 32a1. The second opening 38a5 is connected with a second connection pipe 32a2. The third opening 38b4 is connected with a third connection pipe 32b1. The fourth opening 38b5 is connected with a fourth connection pipe 32b2.

The first connection pipe 32a1 and the third connection pipe 32b1 are each connected to a portion of the refrigerant pipe 10 that leads to the outdoor unit 3. The second connection pipe 32a2 and the fourth connection pipe 32b2 are each connected to a portion of the refrigerant pipe 10 that leads to the indoor unit 2. A first main flow path 38a and a second main flow path 38b are defined in the block body 31. The first main flow path 38a connects the first connection pipe 32a1 and the second connection pipe 32a2. The second main flow path 38b connects the third connection pipe 32b1 and the fourth connection pipe 32b2. The first main flow path 38a and the second main flow path 38b are arranged side by side with each other. Fluid flows in the first main flow path 38a and the second main flow path 38b in opposite directions. The first open-close valve 33 is capable of opening and closing the first main flow path 38a. The second open-close valve 34 is capable of opening and closing the second main flow path 38b.

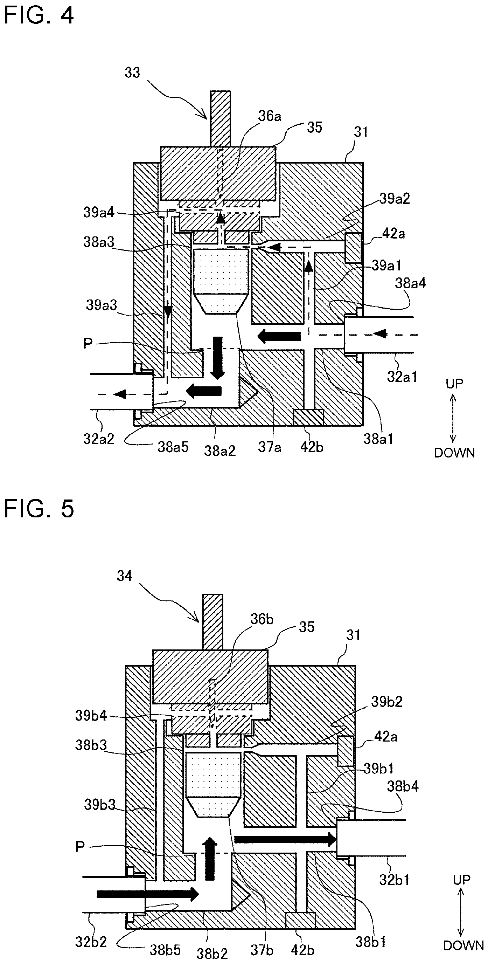

Fig. 3 is a sectional diagram of a part A of Fig. 2. Fig. 3 illustrates the following parts in longitudinal sectional view: the first open-close valve 33, the first connection pipe 32a1, the second connection pipe 32a2, the first main flow path 38a, and a first bleed port 39a. As illustrated in Fig. 3, the first open-close valve 33 is fit in an opening provided at the top of the block body 31, and the first connection pipe 32a1 and the second connection pipe 32a2 are respectively fit in the first opening 38a4 and the second opening 38a5, which are provided in the block body 31. A part B of Fig. 2 represents a longitudinal section of the following parts: the second open-close valve 34, the third connection pipe 32b1, the fourth connection pipe 32b2, the second main flow path 38b, and a second bleed port 39b. The part B of Fig. 2 is similar in configuration to the part A, and thus only its differences from the part A will be described below. A sectional diagram of the part B is illustrated in Fig. 5, and thus reference will be made to Fig. 5 in describing the part B.

### (First Open-Close Valve)

The first open-close valve 33 includes a base 35, a first valve body 37a, a first plunger 36a, a flow passage 39a4, and a spring 41. The spring 41 may be optionally provided to increase the closing force for the first valve body 37a. Accordingly, the first open-close valve 33 may include no spring 41. As illustrated in Fig. 2, the base 35 is fit in the block body 31 with the base 35 being visually observable from outside the open-close valve unit 30 and sealing an opening in the block body 31 to ensure that fluid does not leak. The first plunger 36a and the flow passage 39a4 are provided in the base 35.

The first open-close valve 33 is capable of, when the first open-close valve 33 becomes energized, moving upward into an open state. The first open-close valve 33 is capable of, when the first open-close valve 33 becomes de-energized, moving downward into a closed state from its position corresponding to the energized state. As illustrated in Fig. 3, the flow passage 39a4 has a T-shape. When the first open-close valve 33 becomes de-energized, the first plunger 36a becomes positioned in the leg portion of the T-shape of the flow passage 39a4 to block off the flow passage 39a4. When the first open-close valve 33 becomes energized, the first plunger 36a moves to a position above the flow passage 39a4, which causes the flow passage 39a4 to be placed in a communicating state. That is, a closed state of the first plunger 36a refers to a state in which the first plunger 36a blocks off the flow passage 39a4. An open state of the first plunger 36a refers to a state in which the flow passage 39a4 is placed in a communicating state. Fig. 3 illustrates the first plunger 36a in its closed state. Fig. 4 illustrates the first plunger 36a in its open state.

With the flow passage 39a4 blocked off, the first bleed port 39a is in a non-communicating state. That is, with the first plunger 36a in its closed state, the first bleed port 39a is blocked off. With the flow passage 39a4 in a communicating state, the first bleed port 39a is in a communicating state. That is, with the first plunger 36a in its open state, the first bleed port 39a is in a communicating state.

The first valve body 37a is movable in the first main flow path 38a to open and close the first main flow path 38a. According to Embodiment 1, the first valve body 37a is disposed in a portion of the first main flow path 38a that extends in the up-down direction. The first valve body 37a is capable of moving up and down. With the refrigeration apparatus 100 deactivated, the first valve bodies 37a of all of the open-close valve units 30 move down to a closed position P in which the first main flow path 38a is blocked off. If the refrigeration apparatus 100 includes multiple indoor units 2, a situation may occur in which an active indoor unit 2 and an inactive indoor unit 2 exist simultaneously. For example, one such situation would be where, in the refrigeration apparatus 100 illustrated in Fig. 1, the indoor units 2a and 2c are active, and the indoor unit 2b is inactive. In this case, due to the pressure differential with respect to the surrounding refrigerant, the first valve body 37a of the open-close valve unit 30b corresponding to the indoor unit 2b moves down to the closed position P in which the first valve body 37a blocks off the first main flow path 38a of the open-close valve unit 30b. Operation of the first valve body 37a will be described later in conjunction with the description of operation of the open-close valve unit 30, and is thus not described here in detail. The base 35 and the first valve body 37a do not need to be connected but may be separate.

The first open-close valve 33 may be provided with biasing means configured to bias the first valve body 37a into the closed position P. This helps to increase the reliability with which the first main flow path 38a is blocked off by the first valve body 37a. In Fig. 3, the spring 41 is disposed as biasing means between the base 35 and the first valve body 37a. The spring 41 serves to bias the first valve body 37a to the closed position P as the first valve body 37a moves down. This allows the first main flow path 38a to be securely blocked off. The biasing means is not an indispensable component. The specific implementation of the spring 41 serving as biasing means is not limited to that illustrated in Fig. 3.

### (First Main Flow Path)

As illustrated in Fig. 3, in the block body 31, the first main flow path 38a is defined between the first connection pipe 32a1 and the second connection pipe 32a2. The first connection pipe 32a1 connects to a portion of the refrigerant pipe 10 that leads to the outdoor unit 3. The second connection pipe 32a2 connects to a portion of the refrigerant pipe 10 that leads to the indoor unit 2a. Fluid is allowed to flow by way of the first main flow path 38a either from the first connection pipe 32a1 toward the second connection pipe 32a2, or from the second connection pipe 32a2 toward the first connection pipe 32a1.

As illustrated in Fig. 3, the first main flow path 38a includes the first opening 38a4, a first main flow path 38a1, a first main-flow-path communication part 38a3, a first main flow path 38a2, and the second opening 38a5. The first opening 38a4 is connected with the first connection pipe 32a1, and serves as an outlet or an inlet for fluid. The first main flow path 38a1 is a flow path that extends substantially horizontally from the first opening 38a4. The first main-flow-path communication part 38a3 is a flow path located between the first main flow path 38a1 and the first main flow path 38a2 and extending upward from an end of the first main flow path 38a1. The first main flow path 38a2 is a flow path with a generally L-shape. The first main flow path 38a2 extends downward from the lower end of the first main-flow-path communication part 38a3, and then further extends substantially horizontally. The first main flow path 38a2 is connected at one end to the lower end of the first main-flow-path communication part 38a3 as described above, and connected at the other end to the second opening 38a5. The second opening 38a5 is connected with the second connection pipe 32a2, and serves as an outlet or an inlet for fluid. The first valve body 37a moves up in the first main-flow-path communication part 38a3 to open the first main flow path 38a, and moves down in the first main-flow-path communication part 38a3 to close the first main flow path 38a. To avoid complexity of illustration, a reference sign corresponding to the first main flow path 38a is not illustrated in Figs. 3 and 4.

The first main flow path 38a is blocked off when the first valve body 37a is in the closed position P. The closed position P of the first valve body 37a corresponds to a position where the first main-flow-path communication part 38a3 and the first main flow path 38a2 connect with each other. The first main flow path 38a2 has a width that does not allow the first valve body 37a to move in the first main flow path 38a2. The first main flow path 38a2 is connected with the lower end of the first main-flow-path communication part 38a3. Consequently, as the first valve body 37a moves down in the first main-flow-path communication part 38a3, the first valve body 37a is unable to move further down below the position where the first main-flow-path communication part 38a3 and the first main flow path 38a2 connect with each other. That is, in this state, the first valve body 37a blocks communication between the first main-flow-path communication part 38a3 and the first main flow path 38a2. The first main flow path 38a1 is connected to the first main-flow-path communication part 38a3 at a position above the closed position P of the first valve body 37a. Accordingly, when the first valve body 37a is at rest in the closed position P, the first valve body 37a blocks communication between the first main flow path 38a1 and the first main-flow-path communication part 38a3.

### (First Bleed Port)

The block body 31 is provided with the first bleed port 39a that branches off from the first main flow path 38a, and that is arranged side by side with the first main flow path 38a. According to Embodiment 1, the first bleed port 39a defines a flow path that is connected at one end to the first main flow path 38a1 and at the other end to the first main flow path 38a2. The first bleed port 39a has a sectional area smaller than the sectional area of the first main flow path 38a.

The first bleed port 39a includes the following parts: a first bleed port 39a1 branching off from the first main flow path 38a1 and extending upward; a first bleed port 39a2 located above the first main flow path 38a1 and arranged side by side with the first main flow path 38a1, the first bleed port 39a2 being connected to the first bleed port 39a1 and the first main-flow-path communication part 38a3; the flow passage 39a4 in the base 35; and a first bleed port 39a3 branching off from the first main flow path 38a2 and extending upward, the first bleed port 39a3 being connected to the flow passage 39a4. To avoid complexity of illustration, a reference sign corresponding to the first bleed port 39a is not illustrated in Figs. 3 and 4.

A cap 42b is disposed at the lower end of the first bleed port 39a1. The cap 42b seals off the lower end against leakage of fluid. A cap 42a is disposed at an end of the first bleed port 39a2 that is connected to neither the first bleed port 39a1 nor the first main-flow-path communication part 38a3. The cap 42a seals off the above-mentioned end against leakage of fluid.

A portion of the first bleed port 39a2 that is connected to the first main-flow-path communication part 38a3 is narrower than other portions of the first bleed port 39a2. Consequently, as fluid flows from the first bleed port 39a2 to the first main-flow-path communication part 38a3, the pressure of the fluid decreases due to pressure loss.

The flow passage 39a4 is connected at one end to the first bleed port 39a3, and connected at another end to the first main-flow-path communication part 38a3. As described above, with the first open-close valve 33 in its de-energized state, the first plunger 36a is in a closed state to block off the flow passage 39a4. The first bleed port 39a is thus blocked off. With the first open-close valve 33 in its energized state, the first plunger 36a is in an open state to place the flow passage 39a4 in a communicating state. The first bleed port 39a is thus placed in a communicating state.

### (Second Open-Close Valve, Second Main Flow Path, And Second Bleed Port)

The part A and the part B in Fig. 2 are identical in configuration, and are thus substantially the same even through these parts differ in the names of associated components. The first valve body 37a of the first open-close valve 33 corresponds to a second valve body 37b of the second open-close valve 34, and the first plunger 36a of the first open-close valve 33 corresponds to a second plunger 36b of the second open-close valve 34. The first main flow path 38a corresponds to the second main flow path 38b defined between the third connection pipe 32b1 and the fourth connection pipe 32b2, and the first main-flow-path communication part 38a3 corresponds to a second main-flow-path communication part 38b3. Further, the first bleed port 39a corresponds to the second bleed port 39b. To avoid complexity of illustration, a reference sign corresponding to the second main flow path 38b, and a reference sign corresponding to the second bleed port 39b are not illustrated in Fig. 5.

In the following description, the first valve body 37a and the second valve body 37b will be simply referred to as "valve body 37" as appropriate when no particular distinction is needed therebetween. The term "valve body 37" as referred to herein is meant to include both the singular and plural forms of the term. The first plunger 36a and the second plunger 36b will be simply referred to as "plunger 36" as appropriate when no particular distinction is needed therebetween. The term "plunger 36" as referred to herein is meant to include both the singular and plural forms of the term. Further, the first main flow path 38a and the second main flow path 38b will be simply referred to as "main flow path 38" as appropriate when no particular distinction is needed therebetween. The term "main flow path 38" as referred to herein is meant to include both the singular and plural forms of the term. The first bleed port 39a and the second bleed port 39b will be simply referred to as "bleed port 39" as appropriate when no particular distinction is needed therebetween. The term "bleed port 39" as referred to herein is meant to include both the singular and plural forms of the term.

### [Operation of Refrigeration Apparatus]

Reference is now made to how the refrigeration apparatus 100 configured as described above operates during cooling operation and during heating operation, based on the flow of refrigerant. Depending on the case, the refrigeration apparatus 100 according to Embodiment 1 operates either in a state in which all of the indoor units 2a, 2b, and 2c perform cooling, or a state in which all of the indoor units 2a, 2b, and 2c perform heating.

### (Cooling Operation)

A case in which the indoor units 2a, 2b, and 2c perform cooling is described below based on the solid arrows illustrated in Fig. 1. The following description assumes that none of the open-close valve units 30a, 30b, and 30c is shut off, and the first open-close valve 33 or the second open-close valve 34 is in its energized state to allow passage of refrigerant. Refrigerant is compressed in the compressor 6 into gas refrigerant, which then passes through the refrigerant flow switching device 9 into the outdoor heat exchanger 7. Once in the outdoor heat exchanger 7, the gas refrigerant condenses while rejecting heat in heat exchange with outdoor air, and then leaves the outdoor heat exchanger 7 as liquid refrigerant.

After leaving the outdoor heat exchanger 7, the liquid refrigerant flows through the refrigerant pipe 10 into the first connection pipe 32a1 of each of the following first open-close valves: the first open-close valve 33a of the open-close valve unit 30a; the first open-close valve 33b of the open-close valve unit 30b; and the first open-close valve 33c of the open-close valve unit 30c.

After entering the first connection pipe 32a1 of each of the open-close valve units 30a to 30c, the liquid refrigerant flows through the first main flow path 38a of each of the open-close valve units 30a to 30c, and exits from the second connection pipe 32a2 of each of the open-close valve units 30a to 30c. After leaving each of the open-close valve units 30a to 30c, the liquid refrigerant has its pressure reduced by the expansion valve 5 in the corresponding one of the indoor units 2a, 2b, and 2c, and then flows into the indoor heat exchanger 4. Once in the indoor heat exchanger 4, the refrigerant cools indoor air by removing heat and evaporating in heat exchange with indoor air, and changes to gas refrigerant, which then leaves the indoor heat exchanger 4.

After leaving the indoor heat exchanger 4, the gas refrigerant flows into the fourth connection pipe 32b2 of each of the open-close valve units 30a to 30c. After entering the fourth connection pipe 32b2 of each of the open-close valve units 30a to 30c, the gas refrigerant flows through the second main flow path 38b of each of the open-close valve units 30a to 30c, and exits from the third connection pipe 32b1 of each of the open-close valve units 30a to 30c. The gas refrigerant then flows through the refrigerant pipe 10 into the outdoor unit 3.

After entering the outdoor unit 3, the gas refrigerant returns to the compressor 6 after passing through the refrigerant flow switching device 9 and the accumulator 25. During cooling operation, the circulation of refrigerant mentioned above is repeated.

### (Heating Operation)

Reference is now made to how refrigerant moves during heating main operation. A case in which the indoor units 2a, 2b, and 2c perform heating is described below based on the dashed arrows illustrated in Fig. 1. The following description assumes that none of the open-close valve units 30a, 30b, and 30c is shut off, and the first open-close valve 33 or the second open-close valve 34 is in its energized state to allow passage of refrigerant. Refrigerant compressed in the compressor 6 passes through the refrigerant flow switching device 9 and leaves the outdoor unit 3.

After leaving the outdoor unit 3, the refrigerant flows through the refrigerant pipe 10 into the third connection pipe 32b1 of each of the following second open-close valves: the second open-close valve 34a of the open-close valve unit 30a; the second open-close valve 34b of the open-close valve unit 30b; and the second open-close valve 34c of the open-close valve unit 30c.

Gas refrigerant entering the third connection pipe 32b1 of each of the open-close valve units 30a to 30c flows through the second main flow path 38b of each of the open-close valve units 30a to 30c, and exits from the fourth connection pipe 32b2 of each of the open-close valve units 30a to 30c. The refrigerant then flows into the indoor heat exchanger 4 of the corresponding one of the indoor units 2a to 2c.

Once in the indoor heat exchanger 4, the gas refrigerant condenses to heat indoor air while rejecting heat in heat exchange with the indoor air, and changes to liquid refrigerant, which then leaves the indoor heat exchanger 4. After leaving the indoor heat exchanger 4, the liquid refrigerant passes through the expansion valve 5 that is in its open state and disposed in each of the indoor units 2a to 2c, and then flows into the second connection pipe 32a2 of each of the open-close valve units 30a to 30c. After entering the second connection pipe 32a2 of each of the open-close valve units 30a to 30c, the liquid refrigerant flows through the first main flow path 38a of each of the open-close valve units 30a to 30c, and exits from the first connection pipe 32a1 of each of the open-close valve units 30a to 30c.

After leaving the first connection pipe 32a1, the liquid refrigerant flows through the refrigerant pipe 10 into the outdoor unit 3. After entering the outdoor unit 3, the liquid refrigerant has its pressure reduced in the expansion valve 8, and flows into the outdoor heat exchanger 7. Once in the outdoor heat exchanger 7, the refrigerant removes heat in heat exchange with outdoor air, and evaporates and gasifies before leaving the outdoor heat exchanger 7. After leaving the outdoor heat exchanger 7, the refrigerant returns to the compressor 6 after passing through the refrigerant flow switching device 9 and the accumulator 25. During heating operation, the circulation of refrigerant mentioned above is repeated.

### [Operation of Open-Close Valve Unit]

Reference is now made to how the first open-close valve 33 and the second open-close valve 34 operate, together with the flow of fluid. When the open-close valve unit 30 is in operation, one of the first open-close valve 33 and the second open-close valve 34 is in an energized state, and the other, non-energized one of the first open-close valve 33 and the second open-close valve 34 is in a de-energized state. That is, when the first open-close valve 33 is in its energized, the second open-close valve 34 is controlled to its de-energized state, and when the second open-close valve 34 is in its energized state, the first open-close valve 33 is controlled to its de-energized state.

### (Energized State)

Fig. 4 is a sectional diagram of the part A of Fig. 2, illustrating an example of how fluid flows when an open-close valve of the open-close valve unit 30 according to Embodiment 1 is in an energized state. In Fig. 4, the flow of fluid with the first open-close valve 33 in its energized state is represented by solid arrows and dashed arrows. The flow of fluid with the second open-close valve 34 in its energized state is similar to the flow of fluid with the first open-close valve 33 in its energized state, and thus not described below in further detail.

When the first open-close valve 33 is energized, the first plunger 36a is placed in its open state. As described above, as the first plunger 36a is placed in its open state, the flow passage 39a4 is placed in a communicating state, which results in the first bleed port 39a being placed in a communicating state. At this time, if the indoor unit 2 is inactive, the first valve body 37a is in the closed position P and closing off the first main flow path 38a as illustrated in Fig. 3. Activating the indoor unit 2 in this state causes refrigerant to start flowing. Then, as represented by dashed arrows in Fig. 4, refrigerant flowing from the outdoor unit 3 into the first connection pipe 32a1 passes through the first opening 38a4 into the first main flow path 38a1. At this time, however, the first main flow path 38a is closed off by the first valve body 37a. This causes the refrigerant to flow through the first bleed port 39a in the following order: the first bleed ports 39a1 and 39a2, the flow passage 39a4, and then the first bleed port 39a3.

The bleed port 39 has a sectional area smaller than the sectional area of the main flow path 38. Accordingly, as refrigerant flows through the first bleed ports 39a1 and 39a2, its pressure is reduced due to pressure loss. Movement of the refrigerant from the first bleed port 39a2 toward the flow passage 39a4 results in the pressure in the area above the first valve body 37a becoming lower than the pressure in the area below the first valve body 37a. This creates a force that causes the first valve body 37a to move upward from the closed position P. As a result, the first valve body 37a previously in the closed position P as illustrated in Fig. 3 moves up as illustrated in Fig. 4.

As the first valve body 37a moves upward from its closed position P, the first main flow path 38a is placed in a communicating state. Consequently, as represented by the solid arrows in Fig. 4, refrigerant entering the first connection pipe 32a1 from the outdoor unit 3 is allowed to flow from the first main flow path 38a1 into the first main flow path 38a2 by way of the first main-flow-path communication part 38a3.

Further, as refrigerant entering the first bleed port 39a from the first main flow path 38a passes through the first bleed port 39a with a reduced sectional area relative to the first main flow path 38a, the refrigerant decreases in pressure relative to the refrigerant passing through the first main flow path 38a. Consequently, the pressure within the first main-flow-path communication part 38a3 is maintained lower in areas above the first valve body 37a than in areas below the first valve body 37a. Accordingly, the first valve body 37a continues to experience a force that causes the first valve body 37a to be raised from the closed position P. The first valve body 37a thus remains in its raised state. That is, the first main flow path 38a is maintained in its communicating state.

As described above, when in the energized state, the first open-close valve 33 becomes open as the first main flow path 38a is placed in its communicating state and the first bleed port 39a is placed in its communicating state.

### (De-Energized State)

Reference is now made to how the first open-close valve 33 and the second open-close valve 34 operate when in their de-energized state, together with the flow of fluid. Fig. 5 is a sectional diagram of the part B of Fig. 2, illustrating an example of how fluid flows when an open-close valve of the open-close valve unit 30 according to Embodiment 1 is in a de-energized state. In Fig. 5, the flow of fluid with the second open-close valve 34 in its de-energized state is represented by solid arrows. The flow of fluid with the first open-close valve 33 in its de-energized state is similar to the flow of fluid with the second open-close valve 34 in its de-energized state, and thus not described below.

When the second open-close valve 34 is de-energized, the second plunger 36b of the second open-close valve 34 is placed in a closed state. As described above, as the second plunger 36b is placed in its closed state, a flow passage 39b4 is blocked off, which results in the second bleed port 39b being blocked off. At this time, if the indoor unit 2 is inactive, the second valve body 37b is in the closed position P and closing off the second main flow path 38b as illustrated in Fig. 3. The first open-close valve 33 is assumed to be in a state that allows passage of refrigerant as described above with reference to Fig. 4. Activating the indoor unit 2 in this state causes refrigerant to start flowing. Then, as represented by solid arrows in Fig. 5, refrigerant flowing from the indoor unit 2 into the fourth connection pipe 32b2 passes through the fourth opening 38b5, and flows to a second main flow path 38b2, the second main-flow-path communication part 38b3, and a second main flow path 38b1 in the stated order.

At this time, the second valve body 37b moves upward from the closed position P due to the dynamic pressure of refrigerant flowing in the second main flow path 38b. The second main flow path 38b is thus placed in its communicating state. A portion of the refrigerant entering the second main-flow-path communication part 38b3 flows into a second bleed port 39b2 by passing in between the second main-flow-path communication part 38b3 and the second valve body 37b. At this time, the refrigerant decreases in pressure due to pressure loss. As a result, the pressure in an upper part of the second main-flow-path communication part 38b3 becomes lower than the pressure in a lower part of the second main-flow-path communication part 38b3. Accordingly, the second valve body 37b continues to experience a force that causes the second valve body 37b to be raised from the closed position P. The second valve body 37b thus remains in its raised state. That is, the second main flow path 38b is maintained in its communicating state.

As described above, when in the de-energized state, the second open-close valve 34 becomes open as the second main flow path 38b is placed in its communicating state and the second bleed port 39b is placed in its communicating state.

Reference is now made to how the open-close valve unit 30 operates during cooling operation and during heating operation, based on the flow of refrigerant. As described above, when the first open-close valve 33 of the open-close valve unit 30 is in its de-energized state, the first main flow path 38a is placed in a communicating state as the first valve body 37a is moved upward from the closed position P by the dynamic pressure of fluid flowing in the first main flow path 38a. In this regard, however, when the first valve body 37a is in the closed position P, the first valve body 37a is blocking the first main-flow-path communication part 38a3. Consequently, fluid flowing into the first main flow path 38a1 through the first opening 38a4 is not allowed to pass into the first main-flow-path communication part 38a3. As a result, the fluid is unable to pass through the first main flow path 38a. Thus, no force is generated that causes the first valve body 37a to move upward from the closed position P. Due to the first open-close valve 33 being in its de-energized state, the first bleed port 39a is in a non-communication state. That is, the first main flow path 38a is in a non-communicating state. The same as above holds for the second open-close valve 34. That is, with the second open-close valve 34 in its de-energized state, even when refrigerant enters through the third opening 38b4, the second valve body 37b does not move upward from the closed position P, and thus the second main flow path 38b is not placed in a communicating state.

For the reasons mentioned above, when the first open-close valve 33 is in its de-energized state, unless fluid flows in from the second opening 38a5, the first main flow path 38a is not placed in a communication state, nor is the first open-close valve 33 placed in an open state. When the second open-close valve 34 is in its de-energized state, unless fluid flows in from the fourth opening 38b5, the second main flow path 38b is not placed in a communication state, nor is the second open-close valve 34 placed in an open state. That is, in the refrigeration apparatus 100 illustrated in Fig. 1, the first open-close valve 33 is controlled in the de-energized state for a case in which refrigerant flows in from the second opening 38a5, and the second open-close valve 34 is controlled in the de-energized state for a case in which refrigerant flows in from the fourth opening 38b5.

### (Cooling Operation)

As described above with reference to Fig. 1, during cooling operation, refrigerant flows from the outdoor unit 3 into the first open-close valve 33 of the open-close valve unit 30, and then passes through the indoor unit 2 before entering the second open-close valve 34 of the open-close valve unit 30. Now, if the first open-close valve 33 is in its de-energized state at this time, then as illustrated in Fig. 3, even though refrigerant attempts to enter the first main flow path 38a1 from the first connection pipe 32a1, the first valve body 37a placed in the closed position P is blocking the first main-flow-path communication part 38a3, and the first main flow path 38a1 is connected with a side portion of the first valve body 37a placed in the closed position P. This prevents the first valve body 37a from being moved upward from the closed position P by the dynamic pressure of the refrigerant. Therefore, the first open-close valve 33 does not become open, and the refrigerant is not allowed to enter the indoor unit 2.

By contrast, when energized, the first open-close valve 33 becomes open as described above with reference to Fig. 4, and thus refrigerant is allowed to flow from the open-close valve unit 30 to the indoor unit 2. After passing through the indoor unit 2, the refrigerant flows into the second main flow path 38b2 through the fourth connection pipe 32b2 of the open-close valve unit 30. Then, as illustrated in Fig. 5, the dynamic pressure of the refrigerant causes the second valve body 37b to move upward from the closed position P. The second main flow path 38b is thus placed in a communicating state. That is, the second open-close valve 34 becomes open even through the second open-close valve 34 is in its de-energized state.

As described above, during cooling operation, the open-close valve units 30a, 30b, and 30c are controlled such that the first open-close valves 33a, 33b, and 33c are in their energized state and the second open-close valves 34a, 34b, and 34c are in their de-energized state.

### (Heating Operation)

As described above with reference to Fig. 1, during heating operation, refrigerant flows from the outdoor unit 3 into the second open-close valve 34 of the open-close valve unit 30, and then passes through the indoor unit 2 and the expansion valve 5 before entering the first open-close valve 33 of the open-close valve unit 30. Now, if the second open-close valve 34 is in its de-energized state at this time, even though refrigerant attempts to enter the second main flow path 38b from the third connection pipe 32b1, the second valve body 37b placed in the closed position P is blocking the second main-flow-path communication part 38b3, and the second main flow path 38b1 is connected with a side portion of the second valve body 37b placed in the closed position P. This prevents the second valve body 37b from being moved upward from the closed position P by the dynamic pressure of the refrigerant. Therefore, the second open-close valve 34 does not become open, and the refrigerant is not allowed to enter the indoor unit 2.

By contrast, when the second open-close valve 34 is in its energized state, the second plunger 36b is in an open state, and refrigerant is thus allowed to flow from the open-close valve unit 30 to the indoor unit 2. After passing through the indoor unit 2 and the expansion valve 5, the refrigerant flows into the first main flow path 38a2 through the second connection pipe 32a2 of the open-close valve unit 30. Then, the dynamic pressure of the refrigerant causes the first valve body 37a to move upward from the closed position P. The first main flow path 38a is thus placed in a communicating state. That is, the first open-close valve 33 becomes open even through the first open-close valve 33 is in its de-energized state.

As described above, during heating operation, the open-close valve units 30a, 30b, and 30c are controlled such that the second open-close valves 34a, 34b, and 34c are in their energized state and the first open-close valves 33a, 33b, and 33c are in their de-energized state.

When the first open-close valve 33 and the second open-close valve 34 are both in their de-energized state, even if the compressor 6 is activated, the first open-close valve 33 and the second open-close valve 34 are in their closed state, thus inhibiting flow of refrigerant.

### [Refrigerant Leakage Detection Process]

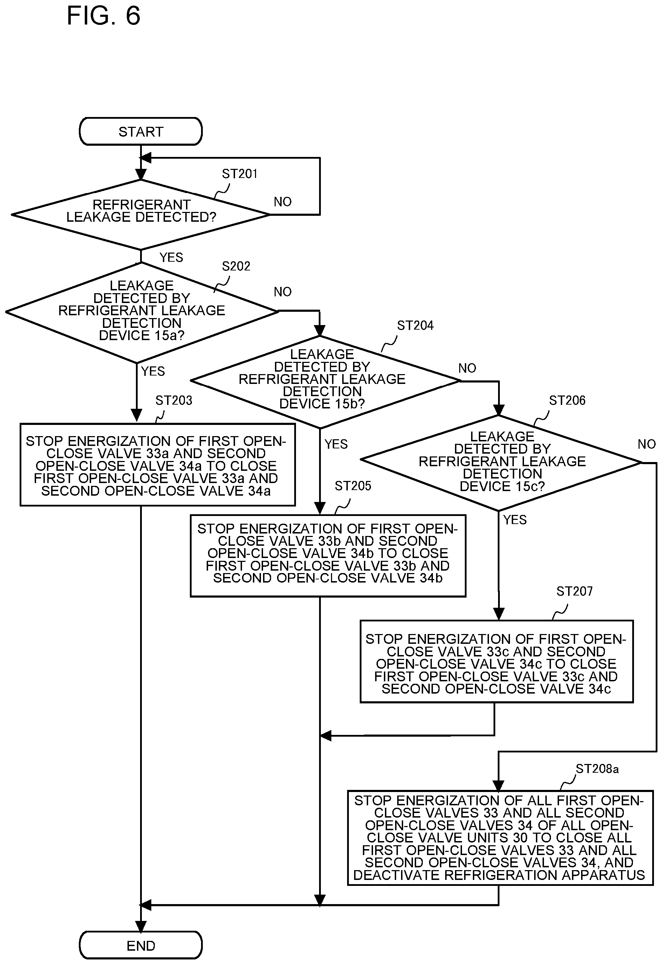

Fig. 6 is a flowchart illustrating an example of a refrigerant leakage detection process to be executed by the refrigeration apparatus 100 according to Embodiment 1. Fig. 6 illustrates an example of the sequence of control of the open-close valve units 30a, 30b, and 30c that is executed in the refrigeration apparatus 100 illustrated in Fig. 2 in response to detection of refrigerant leakage. It is assumed in this case that one of the first open-close valve 33 and the second open-close valve 34 is in an energized state and the other is in a de-energized state, and refrigerant is circulating in the refrigeration apparatus 100. As illustrated in Fig. 6, the controller 20 determines whether refrigerant leakage has been detected (step ST201). If refrigerant leakage has been detected, the controller 20 determines whether the refrigerant leakage has been detected by the refrigerant leakage detection device 15a disposed in the space 1a (step ST202). If the refrigerant leakage has been detected by the refrigerant leakage detection device 15a, the controller 20 stops energization of the first open-close valve 33a and the second open-close valve 34a of the open-close valve unit 30a to thereby close the first open-close valve 33a and the second open-close valve 34a (step ST203).

If the refrigerant leakage has not been detected by the refrigerant leakage detection device 15a, the controller 20 determines whether the refrigerant leakage has been detected by the refrigerant leakage detection device 15b disposed in the space 1b (step ST204). If the refrigerant leakage has been detected by the refrigerant leakage detection device 15b, the controller 20 stops energization of the first open-close valve 33b and the second open-close valve 34b of the open-close valve unit 30b to thereby close the first open-close valve 33b and the second open-close valve 34b (step ST205).

If the refrigerant leakage has not been detected by the refrigerant leakage detection device 15b, the controller 20 determines whether the refrigerant leakage has been detected by the refrigerant leakage detection device 15c disposed in the space 1c (step ST206). If the refrigerant leakage has been detected by the refrigerant leakage detection device 15c, the controller 20 stops energization of the first open-close valve 33c and the second open-close valve 34c of the open-close valve unit 30c to thereby close the first open-close valve 33c and the second open-close valve 34c (step ST207).

If the refrigerant leakage has not been detected by the refrigerant leakage detection device 15c, the controller 20 stops energization of the first open-close valves 33 and the second open-close valves 34 of all of the open-close valve units 30 to thereby close all of the first open-close valves 33 and the second open-close valves 34, and deactivates the refrigeration apparatus 100 (step ST208a).

According to the process in the flowchart illustrated in Fig. 6, if none of the refrigerant leakage detection devices 15 has detected refrigerant leakage even through the controller 20 has detected refrigerant leakage, then at step ST208a, all of the first open-close valves 33 and the second open-close valves 34 are placed in a de-energized state and become closed, and further, the refrigeration apparatus 100 is deactivated. This helps to ensure safety in the refrigeration apparatus 100 when refrigerant leakage has been detected.

Reference is now made to an exemplary case in which refrigerant leakage has occurred in the space 1a to describe, based on the flow of refrigerant, how the first open-close valve 33 and the second open-close valve 34 of the open-close valve unit 30 are placed in a closed state in such a case.

If the indoor unit 2a disposed in the space 1a fails for some reason, and refrigerant leaks out from the indoor unit 2a, the refrigerant leakage detection device 15a disposed in the space 1a detects refrigerant leakage. Examples of potential failures of the indoor unit 2a include pipe ruptures. The controller 20 determines that refrigerant leakage has been detected (step ST201), and determines whether the refrigerant leakage has been detected by the refrigerant leakage detection device 15a (step ST202). In the present case, the refrigerant leakage has been detected by the refrigerant leakage detection device 15a, and the controller 20 thus proceeds to step ST204.

The controller 20 determines which one of the first open-close valve 33a and the second open-close valve 34a of the open-close valve unit 30a is in an energized state. The controller 20 stops energization of the first open-close valve 33a if the first open-close valve 33a is in an energized state, and stops energization of the second open-close valve 34a if the second open-close valve 34a is in an energized state. Therefore, the first open-close valve 33a or the second open-close valve 34a is placed in a de-energized state, and the first plunger 36a or the second plunger 36b is placed in a closed state. The first bleed port 39a or the second bleed port 39b is thus blocked off.

As the bleed port 39 is blocked off, the valve body 37 moves down to the closed position P. The main flow path 38 is thus blocked off, and one of the first open-close valve 33a and the second open-close valve 34a that has been in its energized state becomes closed.

As one of the first open-close valve 33a and the second open-close valve 34a that has been in its energized state becomes closed as described above, refrigerant no longer flows into the indoor unit 2a. Refrigerant thus no longer flows from the indoor unit 2a into the second connection pipe 32a2 or the fourth connection pipe 32b2 of the open-close valve unit 30a. Consequently, there is no refrigerant flow through the main flow path 38, and the valve body 37 thus moves down to the closed position P without being moved upward by the dynamic pressure of the refrigerant. The main flow path 38 is thus blocked off, and one of the first open-close valve 33a and the second open-close valve 34a that has been in its de-energized state becomes closed.

When refrigerant leakage occurs, the first open-close valve 33 and the second open-close valve 34 of the open-close valve unit 30 corresponding to the indoor unit 2 whose refrigerant leakage is detected are placed in a closed state by the controller 20 as mentioned above. As a result, refrigerant is no longer allowed to flow to the indoor unit 2, which helps to keep the refrigerant leakage to a minimum. The above-mentioned configuration also helps to prevent all of the refrigerant in the refrigeration apparatus 100 from leaking out to the space 1 where the refrigerant leakage is occurring.

If the refrigerant leakage detection device 15 has not detected refrigerant leakage even through the controller 20 has detected refrigerant leakage, then all of the first open-close valves 33 and the second open-close valves 34 of all of the open-close valve units 30 are placed in a closed state. This helps to improve the safety of the refrigeration apparatus 100. A conceivable case in which the refrigerant leakage detection device 15 has not detected refrigerant leakage even through the controller 20 has detected refrigerant leakage is when there is a malfunction in the software constituting the controller 20.

As described above, the open-close valve unit 30 according to Embodiment 1 includes the block body 31, the first open-close valve 33, and the second open-close valve 34. The block body 31 includes the first main flow path 38a and the second main flow path 38b that are defined within the block body 31. The first main flow path 38a has the first connection pipe 32a1 and the second connection pipe 32a2 each serving as an inlet or an outlet for fluid. The second main flow path 38b has the third connection pipe 32b1 and the fourth connection pipe 32b2 each serving as an inlet or an outlet for fluid. The second main flow path 38b is arranged side by side with the first main flow path 38a. The first open-close valve 33 includes the first valve body 37a that is disposed in the first main flow path 38a, and that is movable in the first main flow path 38a to open and close the first main flow path 38a. The second open-close valve 34 includes the second valve body 37b that is disposed in the second main flow path 38b, and that is movable in the second main flow path 38b to open and close the second valve body 37b. The first open-close valve 33 is in an open state when in an energized state. When the first open-close valve 33 is in the energized state, the second open-close valve 34 is in a de-energized state, and placed in an open state by the dynamic pressure of fluid flowing in the second main flow path 38b.

According to the above-mentioned configuration, the first open-close valve 33 and the second open-close valve 34 are provided as a single open-close valve unit 30. This makes it possible to mount the first open-close valve 33 and the second open-close valve 34 simply through execution of pipe installation and electrical wiring on a single open-close valve unit, which leads to improved working efficiency in mounting these open-close valves. This also makes it possible to provide services such as maintenance and inspection on the open-close valve unit 30, which leads to improved serviceability.

The second open-close valve 34 is made to open by the dynamic pressure of fluid even when in its de-energized state. This makes it possible to reduce the time for which the second open-close valve 34 is energized, which helps to effectively extend the product life of the second open-close valve 34. Further, the extended product life of the second open-close valve 34 helps to effectively reduce the risk of failure of the open-close valve unit 30.

In the open-close valve unit 30 according to Embodiment 1, the block body 31 includes the first bleed port 39a. The first bleed port 39a branches off from the first main flow path 38a, and is arranged side by side with the first main flow path 38a. The first bleed port 39a has a sectional area smaller than a sectional area of the first main flow path 38a. The first main flow path 38a includes the first main-flow-path communication part 38a3 in which the first valve body 37a is movable. The first open-close valve 33 includes the first plunger 36a configured to open and close the first bleed port 39a. The second main flow path 38b includes the second main-flow-path communication part 38b3 in which the second valve body 37b is movable. The open-close valve unit 30 is configured such that, when the first open-close valve 33 is in the energized state and the second open-close valve 34 is in the de-energized state: in response to energization, the first plunger 36a is placed in an open state, and the first bleed port 39a is placed in a communicating state; in response to flowing of the fluid in the first bleed port 39a, the first valve body 37a moves within the first main-flow-path communication part 38a3 to place the first main flow path 38a in a communicating state; and in response to flowing of the fluid into the second main flow path 38b from the fourth connection pipe 32b2, the second valve body 37b moves within the second main-flow-path communication part 38b3 to place the second main flow path 38b in a communicating state.

According to the above-mentioned configuration, when the first open-close valve 33 is in the energized state, simply placing the first plunger 36a of the first open-close valve 33 in an open state allows the first open-close valve 33 to become open. This ensures that the open-close valve unit 30 does not become complex in configuration.

In the open-close valve unit 30 according to Embodiment 1, when the first open-close valve 33 is in its de-energized state and the second open-close valve 34 is in its de-energized state, the first plunger 36a is in a closed state, and the first bleed port 39a is blocked off. At this time, the first valve body 37a is located in the closed position P within the first main-flow-path communication part 38a3 and the first main flow path 38a is thus blocked off, and the second valve body 37b is located in the closed position P within the second main-flow-path communication part 38b3 and the second main flow path 38b is thus blocked off. As a result of the above-mentioned configuration, the first open-close valve 33 and the second open-close valve 34 are in their closed state when in the de-energized state. This makes it possible to prevent the fluid from flowing through the open-close valve unit 30.

In the open-close valve unit 30 according to Embodiment 1, the closed position P of the first valve body 37a is located above the second connection pipe 32a2, and the closed position P of the second valve body 37b is located above the fourth connection pipe 32b2. The above-mentioned configuration allows the first valve body 37a to be readily moved upward from the closed position P by the dynamic pressure of fluid flowing in from the second connection pipe 32a2. The above-mentioned configuration also allows the second valve body 37b to be readily moved upward from the closed position P by the dynamic pressure of fluid flowing in from the fourth connection pipe 32b2. The above-mentioned configuration therefore makes it possible to achieve the first open-close valve 33 and the second open-close valve 34 that, even when in their de-energized state, allow the main flow path 38 to be made open by the dynamic pressure of fluid, without increasing the complexity of the configuration of the open-close valve unit 30.

In the open-close valve unit 30 according to Embodiment 1, the first open-close valve 33 includes the base 35, which includes the flow passage 39a4 constituting part of the first bleed port 39a, and the first plunger 36a is disposed in the base 35 in a manner that allows the first plunger 36a to open and close the flow passage 39a4. According to the above-mentioned configuration, the base 35 in which the first plunger 36a and the flow passage 39a4 are disposed is handled as an integral component. This facilitates assembly of the first open-close valve 33.

In the open-close valve unit 30 according to Embodiment 1, the open-close valve unit 30 includes biasing means configured to bias at least one of the first valve body 37a and the second valve body 37b into the corresponding closed position. According to the above-mentioned configuration, positioning the valve body 37 in the closed position P allows for improved closure of the main flow path 38. This therefore helps to improve the blockage of fluid in the open-close valve unit 30 by the valve body 37.

In the open-close valve unit 30 according to Embodiment 1, the block body 31 includes the second bleed port 39b. The second bleed port 39b branches off from the second main flow path 38b, and is arranged side by side with the second main flow path 38b. The second bleed port 39b has a sectional area smaller than a sectional area of the second main flow path 38b. The second open-close valve 34 includes the second plunger 36b configured to open and close the second bleed port 39b. When the first open-close valve 33 is in the energized state, the second open-close valve 34 is in a de-energized state, and placed in an open state by the dynamic pressure of fluid flowing in the first main flow path 38a.

The above-mentioned configuration allows fluid to pass not only from the first open-close valve 33 toward the second open-close valve 34 but also from the second open-close valve 34 toward the first open-close valve 33. The open-close valve unit 30 configured as described above can be thus used for an apparatus in which fluid reverses its direction of flow. One conceivable example of an apparatus in which fluid reverses its direction of flow is a refrigeration apparatus capable of switching between cooling and heating operations.

The open-close valve unit 30 according to Embodiment 1 is disposed in the refrigeration apparatus 100. The refrigeration apparatus 100 includes the outdoor unit 3, the indoor unit 2a, and the refrigerant pipe 10. The outdoor unit 3 includes the compressor 6 and the outdoor heat exchanger 7, and is configured to generate cooling energy or heating energy. The indoor unit 2a includes the indoor heat exchanger 4, and is configured to perform an air-conditioning operation with the cooling energy or the heating energy generated in the outdoor unit 3. The refrigerant pipe 10 is disposed between the outdoor unit 3 and the indoor unit 2a, and defines a refrigerant circuit in which refrigerant circulates. The open-close valve unit 30 is disposed between the outdoor unit 3 and the indoor unit 2a, such that the refrigerant pipe 10 extending from the indoor unit 2a is connected with the second connection pipe 32a2 and the fourth connection pipe 32b2 of the open-close valve unit 30.

The above-mentioned configuration makes it possible to provide the refrigeration apparatus 100 that allows a cooling operation or a heating operation to be performed through energization of only one of the open-close valves of the open-close valve unit 30. This means that, with the refrigeration apparatus 100, the time for which the first open-close valve 33 and the second open-close valve 34 are energized is shorter than the time for which the refrigeration apparatus 100 operates, by an amount equal to the time for which these valves are placed in their de-energized state. The shorter the time for which the first open-close valve 33 and the second open-close valve 34 are energized, the longer the product life of these open-close valves. This helps to reduce the risk of the first open-close valve 33 and the second open-close valve 34 experiencing a failure resulting from their product life. Further, the reduced risk of failure of the first open-close valve 33 and the second open-close valve 34 also reduces the risk of failure of the open-close valve unit 30 and the refrigeration apparatus 100.

The above-mentioned configuration provides the refrigeration apparatus 100 including two open-close valves provided as a single unit. This makes it possible to mount two open-close valves to a single indoor unit 2 simply through execution of pipe installation and electrical wiring on a single open-close valve unit 30. This allows for improved working efficiency in installing the refrigeration apparatus 100.

The refrigeration apparatus 100 according to Embodiment 1 further includes the refrigerant leakage detection device 15a configured to detect refrigerant leakage in the space 1a in which the indoor unit 2a is disposed. In response to the refrigerant leakage detection device 15a detecting the refrigerant leakage, the first open-close valve 33 and the second open-close valve 34 of the open-close valve unit 30 are placed in the de-energized state. According to the above-mentioned configuration, if refrigerant leakage is detected in the space 1a in which the indoor unit 2a is disposed, refrigerant is no longer allowed to flow to the indoor unit 2a. This makes it possible to keep the refrigerant leakage in the space 1a to a minimum.

Multiple open-close valve units 30 according to Embodiment 1 are disposed in the refrigeration apparatus 100. The refrigeration apparatus 100 includes the outdoor unit 3, the indoor units 2a to 2c, and the refrigerant pipe 10. The outdoor unit 3 includes the compressor 6 and the outdoor heat exchanger 7, and is configured to generate cooling energy or heating energy. Each of the indoor units 2a to 2c includes the indoor heat exchanger 4, and is configured to perform an air-conditioning operation with the cooling energy or the heating energy generated in the outdoor unit 3. The refrigerant pipe 10 is disposed between the outdoor unit 3 and the indoor units 2a, and defines a refrigerant circuit in which refrigerant circulates. The open-close valve units 30 are disposed between the outdoor unit 3 and the indoor units 2a to 2c such that the open-close valve units 30 correspond in one-to-one relation to the indoor units 2. The second connection pipe 32a2 and the fourth connection pipe 32b2 of each of the open-close valve units 30 are connected with the corresponding one of the indoor units 2a to 2c by the refrigerant pipe 10.

According to the above-mentioned configuration, it may suffice to simply mount a single open-close valve unit 30 to a single indoor unit 2, rather than mount two open-close valves individually to a single indoor unit 2. This simplifies pipe installation and electrical wiring in installing the refrigeration apparatus 100 including multiple indoor units 2, and consequently improves working efficiency in installing the refrigeration apparatus 100.

The refrigeration apparatus 100 according to Embodiment 1 further includes the refrigerant leakage detection devices 15a to 15c respectively configured to detect leakage of refrigerant in the spaces 1a to 1c in which the corresponding indoor units 2 are disposed. In the refrigeration apparatus 100, when at least one of the refrigerant leakage detection devices 15a to 15d detects leakage of refrigerant, of the first open-close valves 33a to 33d and the second open-close valves 34a to 34d of the open-close valve units 30a to 30d, the first open-close valves 33a to 33d and the second open-close valves 34a to 34d of the open-close valve units 30a to 30d corresponding to the indoor units 2 each disposed in a space in which leakage of refrigerant is detected are placed in the de-energized state.

According to the above-mentioned configuration, if refrigerant leakage is detected in the space 1 where the indoor unit 2 is disposed, the first open-close valve 33 and the second open-close valve 34 of the open-close valve unit 30 corresponding to the indoor unit 2 disposed in the space where the refrigerant leakage is detected are placed in their closed state. This therefore makes it possible to stop the flow of refrigerant to the indoor unit 2 whose refrigerant leakage is detected, without affecting the operation of the indoor unit 2 disposed in a space where no refrigerant leakage is detected.

### Embodiment 2.

The open-close valve unit 30 and the refrigeration apparatus 100 according to Embodiment 2 are now described below. The refrigeration apparatus 100 according to Embodiment 2 differs in configuration from the refrigeration apparatus 100 according to Embodiment 1 in the following respects: the outdoor unit 3 includes multiple check valves 16a, 16b, 16c, and 16d; and a relay unit 17 is disposed between the outdoor unit 3 and the indoor units 2. In the following description, features corresponding to those according to Embodiment 1 mentioned above are designated by the same reference signs and not described in further detail.

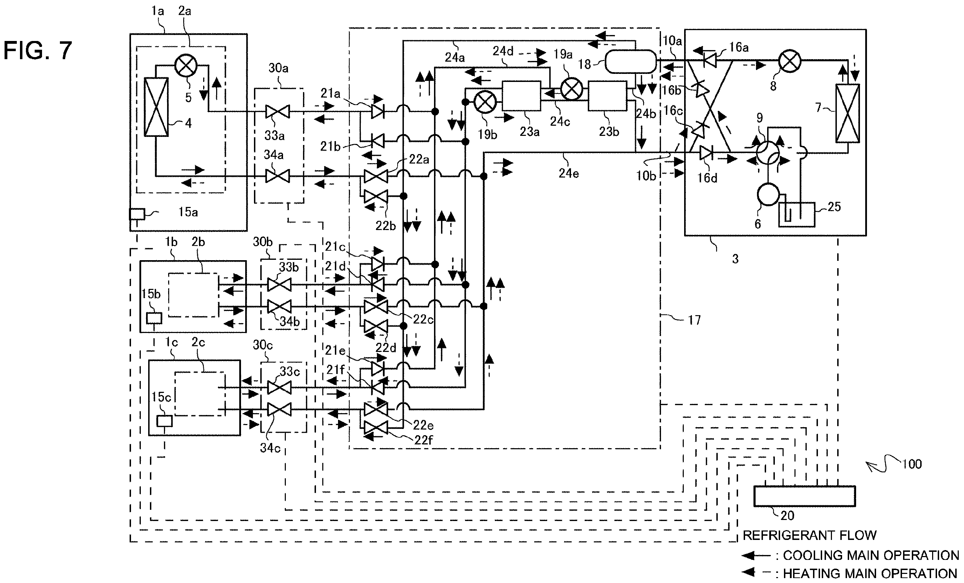

Fig. 7 schematically illustrates an example of the circuit configuration of the refrigeration apparatus 100 according to Embodiment 2. As illustrated in Fig. 7, the refrigeration apparatus 100 according to Embodiment 2 is a two-pipe refrigeration apparatus 100 in which the refrigerant pipe 10 located between the outdoor unit 3 and the relay unit 17 includes two pipes.

As illustrated in Fig. 7, the refrigeration apparatus 100 according to Embodiment 2 includes the open-close valve units 30a, 30b, and 30c respectively corresponding to the indoor units 2a, 2b, and 2c. The configuration of the open-close valve unit 30 according to Embodiment 2 is similar to that according to Embodiment 1 illustrated in Figs. 2 to 4, and thus not described here in further detail.

### [Configuration of Refrigeration Apparatus]

Each of the indoor units 2a to 2c is individually capable of performing a cooling operation and a heating operation. In the refrigeration apparatus 100 according to Embodiment 2, any combination of an indoor unit that performs cooling and an indoor unit that performs heating may be chosen freely. The refrigeration apparatus performs a refrigerant main operation as a whole if the overall cooling load of an indoor unit that performs cooling exceeds the overall heating load of an indoor unit that performs heating. The refrigeration apparatus performs a heating main operation as a whole if the overall heating load of an indoor unit that performs heating exceeds the overall cooling load of an indoor unit that performs cooling. An exemplary case in which the overall cooling load exceeds the overall heating load and thus a cooling main operation is performed is when the number of indoor units that perform cooling is greater than the number of indoor units that perform heating. An exemplary case in which the overall heating load exceeds the overall cooling load and thus a heating main operation is performed is when the number of indoor units that perform heating is greater than the number of indoor units that perform cooling.

In Fig. 7, the flow of refrigerant during an exemplary cooling main operation in which the indoor units 2a and 2b perform cooling and the indoor unit 2c performs heating is represented by solid arrows. Further, in Fig. 7, the flow of refrigerant during an exemplary heating main operation in which the indoor units 2a and 2b perform heating and the indoor unit 2c performs cooling is represented by dashed arrows.

As illustrated in Fig. 7, the outdoor unit 3 includes the check valves 16a, 16b, 16c, and 16d. The check valves 16a, 16b, 16c, and 16d regulate the flow of refrigerant by preventing backflow of refrigerant, so that refrigerant circulates in one direction.

The relay unit 17 is disposed between the outdoor unit 3 and the open-close valve units 30a, 30b, and 30c. The outdoor unit 3 and the relay unit 17 are connected by a refrigerant-pipe communication part 10a and a refrigerant-pipe communication part 10b. Refrigerant travels from the outdoor unit 3 to the relay unit 17 through the refrigerant-pipe communication part 10a. Refrigerant travels from the relay unit 17 to the outdoor unit 3 through the refrigerant-pipe communication part 10b. The refrigerant-pipe communication part 10a and the refrigerant-pipe communication part 10b are pipes each constituting part of the refrigerant pipe 10.

Each of the open-close valve units 30a to 30c, and the relay unit 17 are connected by the refrigerant pipe 10. More specifically, as illustrated in Fig. 7, the refrigerant pipe 10 extending from the first connection pipe 32a1 of the open-close valve unit 30a is connected to check valves 21a and 21b. The refrigerant pipe 10 extending from the first connection pipe 32a1 of the open-close valve unit 30b is connected to check valves 21c and 21d. The refrigerant pipe 10 extending from the first connection pipe 32a1 of the open-close valve unit 30c is connected to check valves 21e and 21f.

As illustrated in Fig. 7, the refrigerant pipe 10 extending from the third connection pipe 32b1 of the open-close valve unit 30a is connected to open-close valves 22a and 22b. The refrigerant pipe 10 extending from the third connection pipe 32b1 of the open-close valve unit 30b is connected to open-close valves 22c and 22d. The refrigerant pipe 10 extending from the third connection pipe 32b1 of the open-close valve unit 30c is connected to open-close valves 22e and 22f.

The open-close valve units 30a to 30c and the indoor units 2a to 2c are similar in configuration to those according to Embodiment 1, and thus not described in further detail. Although the indoor units 2b and 2c each include the indoor heat exchanger 4 and the expansion valve 5 as with the indoor unit 2a, the respective indoor heat exchangers 4 and the respective expansion valves 5 of the indoor units 2b and 2c are not illustrated in Fig. 7.

The relay unit 17 includes the following components: a gas-liquid separator 18, heat exchangers 23a and 23b, expansion valves 19a and 19b, check valves 21a, 21b, 21c, 21d, 21e, and 21f, open-close valves 22a, 22b, 22c, 22d, 22e, and 22f, and pipes 24a, 24b, 24c, and 24d. As illustrated in Fig. 7, the outdoor unit 3 and the gas-liquid separator 18 are connected by the refrigerant-pipe communication part 10a. Each of the above-mentioned components of the relay unit 17, including the gas-liquid separator 18, the heat exchangers 23a and 23b, the expansion valves 19a and 19b, the check valves 21a to 21f, the open-close valves 22a to 22f, and the pipes 24a to 24d, will be described later with reference to a cooling main operation.

### (Cooling Main Operation)

The flow of refrigerant during cooling main operation is described below. Based on the solid arrows in Fig. 7, a case in which the indoor units 2a and 2b perform cooling and the indoor unit 2c performs heating is described below by way of example. Refrigerant is compressed in the compressor 6 into gas refrigerant, which then passes through the refrigerant flow switching device 9 into the outdoor heat exchanger 7. Once in the outdoor heat exchanger 7, the gas refrigerant condenses while rejecting heat in heat exchange with outdoor air, and then leaves the outdoor heat exchanger 7 as two-phase gas-liquid refrigerant.

After leaving the outdoor heat exchanger 7, the two-phase gas-liquid refrigerant passes through the expansion valve 8 and the check valve 16a before exiting through the refrigerant-pipe communication part 10a to the relay unit 17. Once in the relay unit 17, the two-phase gas-liquid refrigerant flows into the gas-liquid separator 18, where the two-phase gas-liquid refrigerant is separated into gas refrigerant and liquid refrigerant. The gas refrigerant flows into the pipe 24a, and the liquid refrigerant flows into the pipe 24b. The pipe 24a into which the gas refrigerant flows is connected with the open-close valves 22b, 22d, and 22f. The pipe 24b into which the liquid refrigerant flows is connected with the heat exchanger 23b, the expansion valve 19a, the heat exchanger 23a, and the check valves 21b, 21d, and 21f.

The gas refrigerant entering the pipe 24a flows toward the indoor unit 2c, which performs heating. More specifically, the gas refrigerant entering the pipe 24a passes through the open-close valve 22f into the third connection pipe 32b1 of the open-close valve unit 30c corresponding to the indoor unit 2c. In the open-close valve unit 30c, the second open-close valve 34c is in its energized state, and the first open-close valve 33c is in its de-energized state. The open-close valve unit 30c thus allows passage of refrigerant therethrough at this time. After entering the third connection pipe 32b1 of the open-close valve unit 30c, the gas refrigerant flows through the second main flow path 38b of the open-close valve unit 30c, and exits from the fourth connection pipe 32b2 into the indoor heat exchanger 4 provided in the indoor unit 2c.

Once in the indoor heat exchanger 4 of the indoor unit 2c, the gas refrigerant condenses to heat indoor air while rejecting heat in heat exchange with the indoor air, and changes to liquid refrigerant, which then leaves the indoor heat exchanger 4. After leaving the indoor heat exchanger 4, the liquid refrigerant has its pressure reduced by the expansion valve 5 before flowing into the second connection pipe 32a2 of the open-close valve unit 30c. After entering the second connection pipe 32a2 of the open-close valve unit 30c, the liquid refrigerant flows through the first main flow path 38a of the open-close valve unit 30c, and exits from the first connection pipe 32a1 into the relay unit 17.

Once in the relay unit 17, the liquid refrigerant passes through the check valve 21e into the pipe 24d. The pipe 24d is connected to the pipe 24b located at the outlet side of the expansion valve 19a. Accordingly, in the pipe 24b, the liquid refrigerant entering the pipe 24d combines with the liquid refrigerant that, after being separated off in the gas-liquid separator 18, has undergone expansion in the expansion valve 19a.

The liquid refrigerant separated off in the gas-liquid separator 18 and entering the pipe 24b is subcooled by passing through the heat exchanger 23b and the expansion valve 19a. The resulting liquid refrigerant then combines with the liquid refrigerant flowing in from the pipe 24d. After the resulting liquid refrigerant is subcooled in the heat exchanger 23a, a portion of the liquid refrigerant is diverted from the pipe 24b to the pipe 24c. A portion of the liquid refrigerant not diverted to the pipe 24c travels through the pipe 24b toward the indoor unit 2a or 2b, which performs cooling.

The pipe 24c is connected with the expansion valve 19b and the heat exchangers 23a and 23b. The pipe 24c is connected at the refrigerant outlet side of the heat exchanger 23b to a pipe 24e. Thus, after leaving the heat exchanger 23a, the liquid refrigerant diverted to the pipe 24c undergoes a pressure reduction in the expansion valve 19b, and then flows through the heat exchangers 23a and 23b. In the heat exchangers 23a and 23b, the liquid refrigerant removes heat in heat exchange with the liquid refrigerant flowing in the pipe 24b, thus sub-cooling the liquid refrigerant flowing in the pipe 24b. After leaving the heat exchanger 23b, the refrigerant combines with the gas refrigerant flowing in the pipe 24e, and the resulting refrigerant then flows into the outdoor unit 3.

The liquid refrigerant not diverted to the pipe 24c after leaving the heat exchanger 23a passes through the check valve 21b or 21d into the first connection pipe 32a1 of the open-close valve unit 30a corresponding to the indoor unit 2a or into the first connection pipe 32a1 of the open-close valve unit 30b corresponding to the indoor unit 2b. In the open-close valve unit 30a, the first open-close valve 33a is in its energized state, and the second open-close valve 34a is in its de-energized state. In the open-close valve unit 30b, the first open-close valve 33b is in its energized state, and the second open-close valve 34b is in its de-energized state. The open-close valve units 30a and 30b thus allow passage of refrigerant at this time.

After entering the first connection pipe 32a1 of the open-close valve unit 30a or 30b, the liquid refrigerant flows through the first main flow path 38a of the open-close valve unit 30a or 30b, and exits from the second connection pipe 32a2 of the open-close valve unit 30a or 30b. After leaving the open-close valve unit 30a or 30b, the liquid refrigerant has its pressure reduced by the expansion valve 5 provided in the indoor unit 2a or 2b, and then flows into the indoor heat exchanger 4. Once in the indoor heat exchanger 4, the liquid refrigerant cools indoor air by removing heat and evaporating in heat exchange with indoor air, and changes to gas refrigerant, which then leaves the indoor heat exchanger 4.

After leaving the indoor heat exchanger 4, the gas refrigerant flows into the fourth connection pipe 32b2 of the open-close valve unit 30a or 30b. After entering the fourth connection pipe 32b2 of the open-close valve unit 30a or 30b, the gas refrigerant flows through the second main flow path 38b of the open-close valve unit 30a or 30b, and exits from the third connection pipe 32b1 of the open-close valve unit 30a or 30b into the relay unit 17. Once in the relay unit 17, the gas refrigerant passes through the open-close valve 22a or 22c into the pipe 24e. After entering the pipe 24e, the gas refrigerant combines with the refrigerant flowing in the pipe 24c, and then flows from the relay unit 17 into the outdoor unit 3 through the refrigerant-pipe communication part 10b.

After entering the outdoor unit 3 from the relay unit 17, the gas refrigerant returns to the compressor 6 after passing through the check valve 16d, the refrigerant flow switching device 9, and the accumulator 25. During cooling main operation, the circulation of refrigerant mentioned above is repeated.

### (Heating Main Operation)

The flow of refrigerant during heating main operation is now described below. Based on the dashed arrows in Fig. 7, a case in which the indoor units 2a and 2b perform heating and the indoor unit 2c performs cooling is described below by way of example. The configuration of each of the components of the relay unit 17, including the gas-liquid separator 18, the heat exchangers 23a and 23b, the expansion valves 19a and 19b, the check valves 21a to 21f, the open-close valves 22a to 22f, and the pipes 24a to 24d, is identical to that during cooling main operation, and thus overlapping features of the configuration are not described below in further detail.

Refrigerant compressed in the compressor 6 passes through the refrigerant flow switching device 9 and the check valve 16b, and flows out of the outdoor unit 3 through the refrigerant-pipe communication part 10a into the relay unit 17. Once in the relay unit 17, the refrigerant flows into the gas-liquid separator 18, where the refrigerant is separated into gas refrigerant and liquid refrigerant. The gas refrigerant flows into the pipe 24a, and the liquid refrigerant flows into the pipe 24b.

The gas refrigerant entering the pipe 24a flows toward the indoor unit 2a or 2b, which performs heating. More specifically, the gas refrigerant entering the pipe 24a passes through the open-close valve 22b or 22d into the third connection pipe 32b1 of the open-close valve unit 30a corresponding to the indoor unit 2a or into the third connection pipe 32b1 of the open-close valve unit 30b corresponding to the indoor unit 2b. In the open-close valve unit 30a, the second open-close valve 34a is in its energized state, and the first open-close valve 33a is in its de-energized state. In the open-close valve unit 30b, the second open-close valve 34b is in its energized state, and the first open-close valve 33b is in its de-energized state. The open-close valve units 30a and 30b thus allow passage of refrigerant at this time.

The gas refrigerant entering the third connection pipe 32b1 of each of the open-close valve unit 30a or 30b flows through the second main flow path 38b of the open-close valve unit 30a or 30b, and exits from the fourth connection pipe 32b2 of the open-close valve unit 30a or 30b. The gas refrigerant then flows into the indoor heat exchanger 4 provided in the indoor unit 2a or 2b.

Once in the indoor heat exchanger 4 of the indoor unit 2a or 2b, the gas refrigerant condenses to heat indoor air while rejecting heat in heat exchange with the indoor air, and changes to liquid refrigerant, which then leaves the indoor heat exchanger 4. After leaving the indoor heat exchanger 4, the liquid refrigerant has its pressure reduced by the expansion valve 5 of the indoor unit 2a or 2b before flowing into the second connection pipe 32a2 of the open-close valve unit 30a or 30b. After entering the second connection pipe 32a2 of the open-close valve unit 30a or 30b, the liquid refrigerant flows through the first main flow path 38a of the open-close valve unit 30a or 30b, and exits from the first connection pipe 32a1 of the open-close valve unit 30a or 30b into the relay unit 17.

Once in the relay unit 17, the liquid refrigerant passes through the check valve 21a or 21c into the pipe 24d. The pipe 24d is connected to the pipe 24b, and thus the liquid refrigerant entering the pipe 24d combines in the pipe 24b with the liquid refrigerant that, after being separated off in the gas-liquid separator 18, has undergone expansion in the expansion valve 19a.

The liquid refrigerant flowing in from the pipe 24d combines with the liquid refrigerant that has entered the pipe 24b after being separated off in the gas-liquid separator 18. The liquid refrigerant separated off in the gas-liquid separator 18 is subcooled by passing through the heat exchanger 23b and the expansion valve 19a, before the liquid refrigerant combines with the liquid refrigerant flowing in from the pipe 24d. The combined liquid refrigerant is further subcooled in the heat exchanger 23a. Then, a portion of the liquid refrigerant is diverted from the pipe 24b to the pipe 24c. The pipe 24c is connected to the pipe 24e, and thus the liquid refrigerant diverted to the pipe 24c flows into the pipe 24e after passing through the expansion valve 19b and the heat exchangers 23a and 23b. The liquid refrigerant then combines with the refrigerant flowing in the pipe 24e. The resulting refrigerant then flows into the outdoor unit 3.

The liquid refrigerant not diverted to the pipe 24c travels through the pipe 24b toward the indoor unit 2c, which performs cooling. Specifically, the liquid refrigerant passes through the check valve 21f into the first connection pipe 32a1 of the open-close valve unit 30c corresponding to the indoor unit 2c. In the open-close valve unit 30c, the first open-close valve 33c is in its energized state, and the second open-close valve 34c is in its de-energized state. The open-close valve unit 30c thus allows passage of refrigerant therethrough at this time.

After entering the first connection pipe 32a1 of the open-close valve unit 30c, the liquid refrigerant flows through the first main flow path 38a of the open-close valve unit 30c, and exits from the second connection pipe 32a2. After leaving the open-close valve unit 30c, the liquid refrigerant has its pressure reduced by the expansion valve 5 provided in the indoor unit 2c, and then flows into the indoor heat exchanger 4. Once in the indoor heat exchanger 4, the liquid refrigerant cools indoor air by removing heat and evaporating in heat exchange with indoor air, and changes to gas refrigerant, which then leaves the indoor heat exchanger 4.

After leaving the indoor heat exchanger 4, the gas refrigerant flows into the fourth connection pipe 32b2 of the open-close valve unit 30c. After entering the fourth connection pipe 32b2, the gas refrigerant flows through the second main flow path 38b of the open-close valve unit 30c, and exits from the third connection pipe 32b1 into the relay unit 17. Once in the relay unit 17, the gas refrigerant passes through the open-close valve 22e into the pipe 24e. After entering the pipe 24e, the gas refrigerant combines with the refrigerant flowing in the pipe 24c, and then flows from the relay unit 17 into the outdoor unit 3 through the refrigerant-pipe communication part 10b.

After entering the outdoor unit 3 from the relay unit 17, the gas refrigerant is completely gasified as the gas refrigerant passes through the check valve 16c, the expansion valve 8, and the outdoor heat exchanger 7. The completely gasified refrigerant returns to the compressor 6 after passing through the refrigerant flow switching device 9 and the accumulator 25. During heating main operation, the circulation of refrigerant mentioned above is repeated.

As described above, according to Embodiment 2, multiple open-close valve units 30 according to Embodiment 1 can be disposed in the refrigeration apparatus 100 such that the open-close valve units 30 correspond in one-to-one relation to the indoor units 2a to 2c. The refrigeration apparatus 100 includes the relay unit 17. In the refrigeration apparatus 100, the refrigerant pipe 10 connecting the outdoor unit 3 and the relay unit 17 includes the refrigerant-pipe communication part 10a through which refrigerant flows from the outdoor unit 3 to the relay unit 17, and the refrigerant-pipe communication part 10b through which refrigerant flows from the relay unit 17 to the outdoor unit 3.

According to the above-mentioned configuration, it may suffice to simply mount a single open-close valve unit 30 to a single indoor unit 2, rather than mount an open-close valve individually to the refrigerant pipe 10 at each of the inlet and outlet sides of a single indoor unit 2. The above-mentioned configuration therefore simplifies pipe installation and electrical wiring for multiple indoor units 2 in installing the refrigeration apparatus 100. This leads to improved working efficiency. The above-mentioned configuration also makes it possible to provide services such as maintenance and inspection on the open-close valve unit 30 as a whole, rather than individually on separate open-close valves. This leads to improved serviceability.

### Embodiment 3.

The open-close valve unit 30 and the refrigeration apparatus 100 according to Embodiment 3 are now described below. The refrigeration apparatus 100 according to Embodiment 3 differs from the refrigeration apparatus 100 according to Embodiment 1 in that multiple relay units 17 are disposed between the outdoor unit 3 and the indoor units 2. In the following description, features corresponding to those according to Embodiment 1 mentioned above are designated by the same reference signs and not described in further detail.

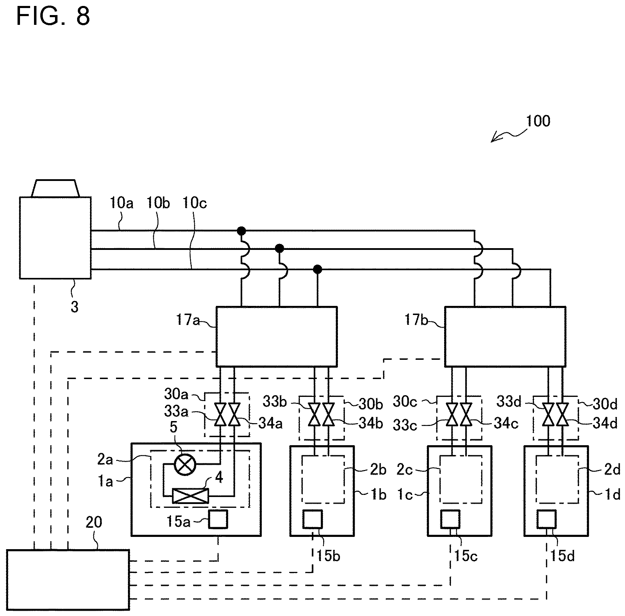

Fig. 8 schematically illustrates an example of the circuit configuration of the refrigeration apparatus 100 according to Embodiment 3. As illustrated in Fig. 8, the refrigeration apparatus 100 according to Embodiment 3 is a three-pipe refrigeration apparatus 100 in which the refrigerant pipe 10 located between the outdoor unit 3 and relay units 17a and 17b includes three pipes. The outdoor unit 3 and each of the relay units 17a and 17b is connected by three refrigerant-pipe communication parts 10a, 10b, and 10c through which refrigerant flows in or out. The refrigerant-pipe communication parts 10a, 10b, and 10c are pipes each constituting part of the refrigerant pipe 10. In Fig. 8, the respective circuit configurations of the relay unit 17a, the relay unit 17b, the outdoor unit 3, and indoor units 2b, 2c, and 2d are not illustrated in detail.

As illustrated in Fig. 8, the refrigeration apparatus 100 according to Embodiment 3 includes open-close valve units 30a, 30b, 30c, and 30d respectively corresponding to indoor units 2a, 2b, 2c, and 2d. The refrigerant pipe 10 extending from the indoor unit 2a is connected to the second connection pipe 32a2 and the fourth connection pipe 32b2 of the open-close valve unit 30a. The refrigerant pipe 10 extending from the indoor unit 2b is connected to the second connection pipe 32a2 and the fourth connection pipe 32b2 of the open-close valve unit 30b. The refrigerant pipe 10 extending from the indoor unit 2c is connected to the second connection pipe 32a2 and the fourth connection pipe 32b2 of the open-close valve unit 30c. The open-close valve unit 30 according to Embodiment 3 is similar in configuration to the open-close valve unit 30 according to Embodiment 1 illustrated in Figs. 2 to 4, and thus not described here in further detail.

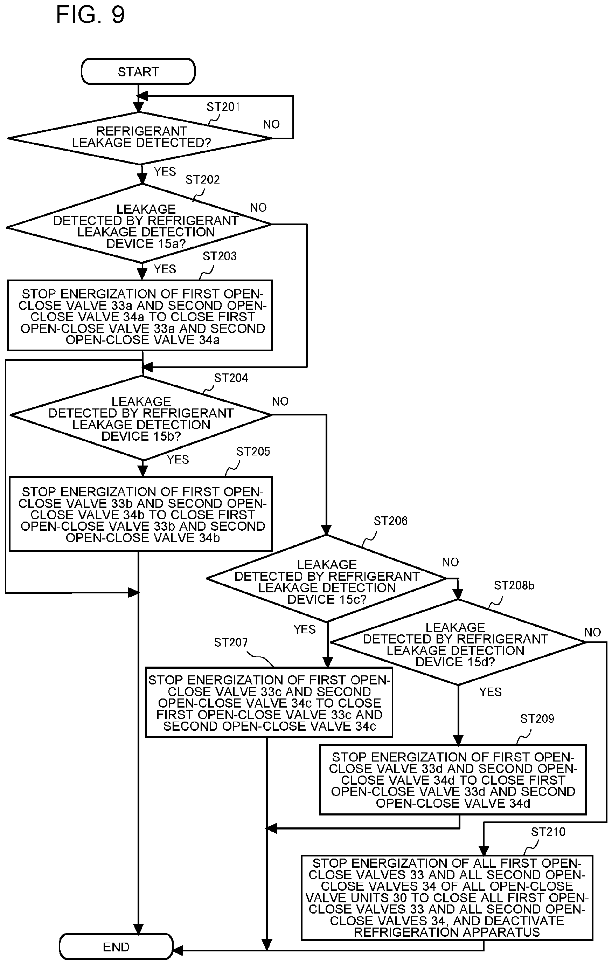

Fig. 9 is a flowchart illustrating an example of a refrigerant leakage detection process to be executed by the refrigeration apparatus 100 according to Embodiment 3. The difference from Embodiment 1 illustrated in Fig. 6 is the addition of steps associated with the refrigerant leakage detection device 15d due to the presence of the indoor unit 2d. Embodiment 3 is otherwise similar in configuration to Embodiment 1.

According to Embodiment 1, if refrigerant leakage has not been detected by the refrigerant leakage detection device 15c, the procedure proceeds to step ST208a. In Embodiment 3, if refrigerant leakage has not been detected by the refrigerant leakage detection device 15c, the controller 20 determines whether the refrigerant leakage has been detected by the refrigerant leakage detection device 15d disposed in a space 1d (step ST208b). If the refrigerant leakage has been detected by the refrigerant leakage detection device 15d, the controller 20 stops energization of the first open-close valve 33d and the second open-close valve 34d of the open-close valve unit 30d to thereby close the first open-close valve 33d and the second open-close valve 34d (step ST209).

If the refrigerant leakage has not been detected by the refrigerant leakage detection device 15d, the controller 20 stops energization of the first open-close valves 33 and the second open-close valves 34 of all of the open-close valve units 30 to thereby close all of the first open-close valves 33 and the second open-close valves 34, and deactivates the refrigeration apparatus 100 (step ST210).

As described above, according to Embodiment 3, the refrigerant leakage detection process is executed in a manner similar to Embodiment 1. Embodiment 3 can thus provide an effect similar to that of Embodiment 1.

According to Embodiment 3, as described above, multiple open-close valve units 30 according to Embodiment 1 can be disposed in the refrigeration apparatus 100 such that the open-close valve unit 30 correspond in one-to-one relation to the indoor units 2a to 2d. The refrigeration apparatus 100 includes the relay units 17a and 17b. In the refrigeration apparatus 100, the refrigerant pipe 10 connecting the outdoor unit 3 and the relay units 17a and 17b includes the refrigerant-pipe communication parts 10a to 10c through which refrigerant flows in or out between the outdoor unit 3 and the relay units 17a and 17b.

According to the above-mentioned configuration, it may suffice to simply mount a single open-close valve unit 30 to a single indoor unit 2, rather than mount an open-close valve individually to the refrigerant pipe 10 at each of the inlet and outlet sides of a single indoor unit 2. The above-mentioned configuration therefore simplifies pipe installation and electrical wiring for multiple indoor units 2 in installing the refrigeration apparatus 100. This leads to improved working efficiency. The above-mentioned configuration also makes it possible to provide services such as maintenance and inspection on the open-close valve unit 30 as a whole, rather than individually on separate open-close valves. This leads to improved serviceability.

### Reference Signs List

1a: space, 1b: space, 1c: space, 1d: space, 2a: indoor unit, 2b: indoor unit, 2c: indoor unit, 2d: indoor unit, 3: outdoor unit, 4: indoor heat exchanger, 5: expansion valve, 6: compressor, 7: outdoor heat exchanger, 8: expansion valve, 9: refrigerant flow switching device, 10: refrigerant pipe, 10a: refrigerant-pipe communication part, 10b: refrigerant-pipe communication part, 10c: refrigerant-pipe communication part, 15a: refrigerant leakage detection device, 15b: refrigerant leakage detection device, 15c: refrigerant leakage detection device, 15d: refrigerant leakage detection device, 16a: check valve, 16b: check valve, 16c: check valve, 16d: check valve, 17a: relay unit, 17b: relay unit, 18: gas-liquid separator, 19a: expansion valve, 19b: expansion valve, 20: controller, 21a: check valve, 21b: check valve, 21c: check valve, 21d: check valve, 21e: check valve, 21f: check valve, 22a: open-close valve, 22b: open-close valve, 22c: open-close valve, 22d: open-close valve, 22e: open-close valve, 22f: open-close valve, 23a: heat exchanger, 23b: heat exchanger, 24a: pipe, 24b: pipe, 24c: pipe, 24d: pipe, 24e: pipe, 25: accumulator, 30: open-close valve unit, 30a: open-close valve unit, 30b: open-close valve unit, 30c: open-close valve unit, 30d: open-close valve unit, 31: block body, 32a1: first connection pipe, 32a2: second connection pipe, 32b1: third connection pipe, 32b2: fourth connection pipe, 33: first open-close valve, 33a: first open-close valve, 33b: first open-close valve, 33c: first open-close valve, 33d: first open-close valve, 34: second open-close valve, 34a: second open-close valve, 34b: second open-close valve, 34c: second open-close valve, 34d: second open-close valve, 35: base, 36: plunger, 36a: first plunger, 36b: second plunger, 37: valve body, 37a: first valve body, 37b: second valve body, 38: main flow path, 38a: first main flow path, 38a1: first main flow path, 38a2: first main flow path, 38a3: first main-flow-path communication part, 38a4: first opening, 38a5: second opening, 38b: second main flow path, 38b1: second main flow path, 38b2: second main flow path, 38b3: second main-flow-path communication part, 38b4: third opening, 38b5: fourth opening, 39: bleed port, 39a: first bleed port, 39a1: first bleed port, 39a2: first bleed port, 39a3: first bleed port, 39a4: flow passage, 39b: second bleed port, 39b1: second bleed port, 39b2: second bleed port, 39b3: second bleed port, 39b4: flow passage, 41: spring, 42a: cap, 42b: cap, 100: refrigeration apparatus, P: closed position.

## Claims

1. An open-close valve unit comprising:
a block body including a first main flow path and a second main flow path that are defined within the block body,
the first main flow path having a first opening and a second opening each serving as an inlet or an outlet for a fluid,
the second main flow path having a third opening and a fourth opening each serving as an inlet or an outlet for the fluid,
the second main flow path being arranged side by side with the first main flow path;
a first open-close valve including a first valve body disposed in the first main flow path, the first valve body being movable in the first main flow path to open and close the first main flow path; and
a second open-close valve including a second valve body disposed in the second main flow path, the second valve body being movable in the second main flow path to open and close the second main flow path,
wherein the first open-close valve is in an open state when in an energized state, and
wherein when the first open-close valve is in the energized state, the second open-close valve is in a de-energized state, and placed in an open state by a dynamic pressure of the fluid flowing in the second main flow path.

2. The open-close valve unit of claim 1,
wherein the block body includes a first bleed port, the first bleed port branching off from the first main flow path and arranged side by side with the first main flow path,
wherein the first bleed port has a sectional area smaller than a sectional area of the first main flow path,
wherein the first main flow path includes a first main-flow-path communication part in which the first valve body is movable,
wherein the first open-close valve includes a first plunger configured to open and close the first bleed port,
wherein the second main flow path includes a second main-flow-path communication part in which the second valve body is movable, and
wherein when the first open-close valve is in the energized state, and the second open-close valve is in the de-energized state,
in response to energization, the first plunger is placed in an open state, and the first bleed port is placed in a communicating state,
in response to flowing of the fluid in the first bleed port, the first valve body moves within the first main-flow-path communication part to place the first main flow path in a communicating state, and
in response to flowing of the fluid from the fourth opening into the second main flow path, the second valve body moves within the second main-flow-path communication part to place the second main flow path in a communicating state.

3. The open-close valve unit of claim 2,
wherein when the first open-close valve is in a de-energized state, and the second open-close valve is in the de-energized state,
the first plunger is in a closed state, and the first bleed port is blocked off,
the first valve body is in a closed position within the first main-flow-path communication part, and the first main flow path is blocked off, and
the second valve body is in a closed position within the second main-flow-path communication part, and the second main flow path is blocked off.

4. The open-close valve unit of claim 3,
wherein the closed position of the first valve body is located above the second opening, and
wherein the closed position of the second valve body is located above the fourth opening.

5. The open-close valve unit of any one of claims 2 to 4,
wherein the first open-close valve includes a base, the base including a flow passage constituting part of the first bleed port, and
wherein the first plunger is disposed in the base in a manner that allows the first plunger to open and close the flow passage.

6. The open-close valve unit of any one of claims 3 to 5, comprising
biasing means configured to bias at least one of the first valve body and the second valve body into the corresponding closed position.

7. The open-close valve unit of any one of claims 1 to 6,
wherein the block body includes a second bleed port, the second bleed port branching off from the second main flow path and arranged side by side with the second main flow path,
wherein the second bleed port has a sectional area smaller than a sectional area of the second main flow path,
wherein the second open-close valve includes a second plunger configured to open and close the second bleed port,
wherein the second open-close valve is in an open state when in an energized state, and
wherein when the second open-close valve is in the energized state, the first open-close valve is in a de-energized state, and is placed in an open state by a dynamic pressure of the fluid flowing in the first main flow path.

8. A refrigeration apparatus comprising:
an outdoor unit including a compressor and an outdoor heat exchanger, the outdoor unit being configured to generate cooling energy or heating energy;
an indoor unit including an indoor heat exchanger, the indoor unit being configured to perform an air-conditioning operation with the cooling energy or the heating energy generated in the outdoor unit;
a refrigerant pipe disposed between the outdoor unit and the indoor unit, the refrigerant pipe defining a refrigerant circuit in which refrigerant circulates; and
the open-close valve unit of any one of claims 1 to 7, the open-close valve unit being disposed between the outdoor unit and the indoor unit,
wherein the second opening and the fourth opening of the open-close valve unit are connected with the indoor unit by the refrigerant pipe.

9. The refrigeration apparatus of claim 8, further comprising
a refrigerant leakage detection device configured to detect leakage of the refrigerant in a space in which the indoor unit is disposed,
wherein in response to the refrigerant leakage detection device detecting leakage of the refrigerant, the first open-close valve and the second open-close valve of the open-close valve unit are placed in the de-energized state.

10. A refrigeration apparatus comprising:
an outdoor unit including a compressor and an outdoor heat exchanger, the outdoor unit being configured to generate cooling energy or heating energy;
a plurality of indoor units each including an indoor heat exchanger, the plurality of indoor units each being configured to perform an air-conditioning operation with the cooling energy or the heating energy generated in the outdoor unit: and
a refrigerant pipe disposed between the outdoor unit and the plurality of indoor units, the refrigerant pipe defining a refrigerant circuit in which refrigerant circulates,
wherein a plurality of the open-close valve units of any one of claims 1 to 7 are each disposed between the outdoor unit and a corresponding one of the plurality of indoor units, and
wherein the second opening and the fourth opening of each of the plurality of open-close valve units are connected with a corresponding one of the plurality of indoor units by the refrigerant pipe.

11. The refrigeration apparatus of claim 10,
wherein a relay unit is disposed between the outdoor unit and the plurality of open-close valve units, the relay unit being configured to switch flow paths in the refrigerant circuit,
wherein the outdoor unit and the relay unit are connected by the refrigerant pipe, and
wherein the refrigerant pipe connecting the outdoor unit and the relay unit comprises a refrigerant-pipe communication part through which the refrigerant flows from the outdoor unit to the relay unit, and a refrigerant-pipe communication part through which the refrigerant flows from the relay unit to the outdoor unit.

12. The refrigeration apparatus of claim 10,
wherein at least one relay unit is disposed between the outdoor unit and the plurality of open-close valve units, the at least one relay unit being configured to switch flow paths in the refrigerant circuit,
wherein the outdoor unit and the at least one relay unit are connected by the refrigerant pipe, and
wherein the refrigerant pipe connecting the outdoor unit and the at least one relay unit comprises three refrigerant-pipe communication parts through which the refrigerant flows in or out between the outdoor unit and the at least one relay unit.

13. The refrigeration apparatus of any one of claims 10 to 12, further comprising:
a plurality of refrigerant leakage detection devices each configured to detect leakage of the refrigerant in a space in which a corresponding one of the plurality of indoor units is disposed,
wherein when at least one of the plurality of refrigerant leakage detection devices detects leakage of the refrigerant,
of the first open-close valves and the second open-close valves of the plurality of open-close valve units, the first open-close valves and the second open-close valves of the plurality of open-close valve units corresponding to the plurality of indoor units each disposed in a space in which the leakage of the refrigerant is detected are placed in the de-energized state.
